# EUROPÄISCHE PATENTSCHRIFT

(11) **EP 1 793 387 B1**
(45) Veröffentlichungstag und Bekanntmachung des Hinweises auf die Patenterteilung: **29.12.2010**
(21) Anmeldenummer: 04817672.1
(22) Anmeldetag: 09.09.2004
(51) Int. Cl.: G21F 9/00, G21F 9/04, G21F 9/12, G21C 19/46

(54) **EXTRAKTION VON RADIONUKLIDEN UNTER VERWENDUNG VON KRONENETHER ENTHALTENDEN EXTRAKTIONSMITTELN**
EXTRACTION OF RADIONUCLIDES USING EXTRACTANTS CONTAINING CROWN ETHERS
EXTRECTION DE RADIONUCLEIDES AU MOYEN D'ECTRACTEURS CONTENENT DES ETHERS COURONNES

(43) Veröffentlichungstag der Anmeldung: 06.06.2007
(73) Patentinhaber: OOO "Proektno-Konstruktorskoe I Proizvodstvenno-Vnedrencheskoe Predpriyatie "Deimos Ltd", Sankt-Petersburg 194223 (RU); FGU "FAPRID", Moscow, 109028 (RU)
(72) Erfinder: GLAGOLENKO, Jury Vasilievich, Chelyabinskaya obl., 456785 (RU); LOGUNOV, Mikhail Vasilievich, Ozersk, Chelyabinskaya obl., 456783 (RU); MAMAKIN, Igor Vitalievich, Moscow, 123154 (RU); POLOSIN, Vladimir Mikhailovich, Moscow, 117513 (RU); ROVNI, Sergey Ivanovich, Chelyabinskaya obl., 456783 (RU); STARCHENKO, Vadim Alexandrovich, St.Petersburg, 192842 (RU); SHISHELOV, Jury Pavlovich, Moscow, 120343 (RU); YAKOVLEV, Nikolay Gennadievich, Chelyabinskaya obl., 456780 (RU)
(74) Vertreter: Jeck, Anton
(86) Internationale Anmeldenummer: PCT/RU2004/000348
(87) Internationale Veröffentlichungsnummer: WO 2006/036083

(56) Entgegenhaltungen:
- DE-C1- 3 219 004
- FR-A- 2 656 149
- US-A- 5 100 585
- US-A- 5 344 624
- US-A- 5 702 608
- US-A1- 2001 029 810

## Beschreibung

Die vorliegende Erfindung betrifft Verarbeitung und Fraktionieren flüssiger radioaktiver Abfälle, die in radiochemischer Produktion anfallen, insbesondere Extraktion, Reinigung und Konzentrieren der Radionuklide, zum Beispiel Strontiums und Cäsiums, aus flüssigen hochaktiven Abfällen nach Verarbeitung des bestrahlten Kernbrennstoffes.

Es folgt zunächst eine Würdigung des relevanten Standes der Technik:

In US 5 344 624 A ist ein Verfahren zur Extraktion des Plutoniums (IV) unter Verwendung von mit einem organischen Lösungsmittel verdünnten Kronenverbindungen beschrieben. Dabei werden als Lösungsmittel für die Kronenverbindungen chlorierte Lösungsmittel, Ether, Kohlenwasserstoff, wie Heptan Dodecan, Benzin und Alkylbenzin. Fettalkohol, Benzonitril und Nitrobenzin, vorzugsweise Benzonitril, Nitrobenzin und Dichlorethan verwendet (Spalte 3, Zeilen 33 bis 40). Zur Lösung der Isomere der Kronenverbindung DCH18C6 (Beispiel 7) wird insbesondere Heptan verwendet. In der Beschreibung sind Beispiele der Verwendung eines Kronenethers, nur Benzonitril und Chloroform, als Lösungsmittel dargestellt. Deshalb können die Ergebnisse der Verwendung anderer genannter Lösungsmittel für unterschiedliche Kronenether nicht verglichen werden. Dabei erfolgt die Plutoniumextraktion bei vielfacher Bearbeitung der organischen Phase mit Säuren. Dies spricht für die Unmöglichkeit des Waschens der organischen Phase mit Wasser wegen Plutoniumauswaschen in der wässrigen Phase.

In US 100 585 A ist ein Verfahren zur Extraktion von Strontium und/oder Technetium aus wässrigen, salpetersauren Lösungen beschrieben, die Salpetersäure und radioaktive Abfälle enthalten, mit Hilfe eines Extraktionsmittels, das Kronenether im Lösungsmittel enthält. Als Lösungsmittel werden dabei mit Wasser lösbare, organischen Stoffe verwendet, in denen Kronenether gelöst wird, beispielsweise aus der Gruppe von Alkoholen, Ketonen, Karbonsäuren und Ethern. Insbesondere ist angegeben, dass die Alkohole 1-Oktanol, 1-Heptanol und 1-Decanol annehmbar sind, obwohl für DCH18C6 und Dt-BuCH18C6 als Lösungsmittel 1-Oktanol bevorzugt zu verwenden ist (Spalte 4, Zeilen 30 bis 40). In der Beschreibung sind iedoch keine quantitativen Ergebnisse der Anwendung von 1-Heptanol angegeben. Dies ermöglicht nicht, die Wirkung der Anwendung von 1-Heptanol in den Ausgangslösungen mit bestimmten Konzentrationen von Strontium und Technetium und in der verbrauchten, organischen Phase zu bewerten.

In US 2001/029810 A1 ist die Anwendung von flüssigen Membranen, die Ethylhexylphosphorsäure enthalten (Paragraph 7), für die Extraktion von Radionukliden beschrieben. Erfindungsgemäß enthält die organische, flüssige Phase ein Modifizierungsmittel im kohlenhydrathaligen Lösungsmittel (Anspruch 7 der vorliegenden Anmeldung). Es ist dabei angegeben, dass als Modifizierungsmittel Alkohole, alkylierte Nitrophenviether, Trialkylphosphate und ihre Gemische verwendet werden können (Anspruch 10). Als Alkohol kann beispielsweise Heptanol (Paragraph 52, Anspruch 11), und als kohlenhydrathaltioe Lösungsmittel können n-Dekan, n-Dodekan usw. (Anspruch 14) verwendet werden. Doch sind keine Beispiele einer Heptanol-Anwendung angegeben.

In FR 2 656 149 A (entspricht US 5 085 834 B1) ist ein Trennverfahren des Plutoniums von Uran und radioaktiven Abfällen mit Hilfe von Kronenethern beschrieben. Das Herauslösen der Isomere aus dem Kronenether DCH18C6 erfolgt unter Verwendung aromatischer Verbindungen, wie Heptan, Dodekan, Benzin usw. (Spalte 5. Zeilen 50 bis 59), bevorzugt Benzonitril oder Dichlorethan (Spalte 6, Zeilen 47- 54). Diese Verbindungen sind explosions- und feuergefährlich und sichern das Halten der extrahierten Radionuklide in der organischen Phase beim Waschen mit Wasser nicht.

In US 5 702 608 A ist ein Dekontaminationsverfahren der radioaktiven, salpetersauren Lösungen, die Strontium und Natrium enthalten, mittels Kontaktieren der Lösung mit der organischen Phase beschrieben, enthaltend Kronenether, wie DCH18C6 und Lösungsmittel, bevorzugt Chloroform. Es ist aber möglich, als Lösungsmittel Heptanol, Oktanol und Dekanol (mit Verweis auf die Bekanntheit dieser Tatsache aus der US 5 100 585 A) zu verweneden.

Das Konzept eines geschlossenen Brennstoffzyklus in Kernenergetik sieht vor Verwertung aller Arten radioaktiver Abfälle mit Gewinnung von Produkten, die für Langzeitaufbewahrung und Lagerung fähig sind, zum Beispiel, Radionuklide im gebundenen Zustand im verfestigten Material oder Abfälle, die zur Verwendung infolge ihrer Radioaktivität fähig sind, zum Beispiel, als Isotopenprodukte.

Die Hauptmasse von Radionukliden nach Regeneration des bestrahlten Kernbrennstoffes besteht in flüssigen hochaktiven Abfällen. Diese Abfälle enthalten neben einem hohen Gehalt von stabilen Makroverunreinigungen: Natrium, Aluminium, Eisen, Seltenerd- und andere Elemente, die nach Gesamtmenge der Komponenten bis 300 g/l betragen, auch kleinere Mengen radioaktiver Nuklide von Cäsium, Strontium und Transuraniumelementen.

Um die zu lagernde Menge verfestigter Materialien, die Radionuklide mit unterschiedlicher Aktivität enthalten, z. B. des derzeit verwendeten Borosilikat- oder Phosphatglasses, zu reduzieren, ist Erhöhung spezifischer Aktivität der Radionuklide in der Glaszusammensetzung notwendig. Erhöhung spezifischer Aktivität der Lösungen, die zur Verfestigung mit nachfolgender Lagerung gebracht werden, ist durch Senkung des Salzgehalts in Lösungen von Radionukliden oder durch Zusatz gewonnener salzloser Fraktionen Radionuklide von Strontium und Cäsium in die Lösungen der zur Lagerung bestimmten Radionukliden möglich.

Die am meisten entwickelten Verfahren zum Fraktionieren flüssiger radioaktiver Abfälle, die sich auf Extraktionsverfahren von Radionukliden basieren, darunter auch Strontiums und Cäsiums, stellen derzeit zwei Bereiche dar.

Ein Bereich hat Verwendung eines polyedrischen Carboran-Komplexes zugrunde, in dem als Komplexbildner zur Cäsiumextraktion chloriertes Cobaltdikarbolit und zur Strontiumextraktion hochmolekulare Polyethylenglycole mit Einsatz eines fluorierten nitroaromatischen Verdünnungsmittels verwendet werden. Diese Technologie hat aber wesentliche Nachteile, die mit vorhergehender Korrektur der Ausgangslösung, hohen Verlusten an Extraktionsmittel bei Raffinatabtrennung und Entzug von Zielprodukten sowie mit hohen Extraktionsmittel- und Verdünnungsmittelkosten verbunden sind.

Ein weiterer Bereich ist mit möglicher Anwendung makrozyklischer Polyethere als Komplexbildner verbunden. Das sind Kronenether verschiedenen Baus, die über einzigartige Selektivität für Radionuklide, darunter auch Ionen des Strontiums-90 und Cäsiums-137, mit einem breitem Spektrum von Verdünnungsmitteln zur Gewinnung der Extraktionsgemische verfügen.

Praktische Anwendung ist aber infolge niedriger Lösbarkeit der Kronenether, insbesondere der Benzolsubstituenten enthaltenden Kronenether, in organischen Verdünnungsmitteln und infolge hoher Lösbarkeit der Kronenether und ihrer Komplexe mit zu entzogenen Kationen radioaktiver Nuklide in Wasserlösungen beschränkt.

Zur Erhöhung der Lösbarkeit von Kronenethern in organischen Verdünnungsmitteln und Senkung ihrer Lösbarkeit in Wasserlösungen wurden makrozyklische Verbindungen aus der Gruppe von Kronenethern synthesiert, die aromatische Fragmente mit Alkyl- und/oder Hydroxyalkylsubstituenten linearen und/oder verzweigten Baus und/oder Cyclohexanfragmente mit Alkyl- und/oder Hydroxyalkylsubstituenten linearen und/oder verzweigten Baus und/oder Fragmente von -O-CHR-CH₂O- mit R = normales oder verzweigtes Alkyl bzw. Hydroxyalkyl enthalten.

Zu den meist verbreiteten Strukturen gehören: Di-tert-butyldibenzo-18-crown-6 (DTBDB18C6), Di-isooctyldibenzo-18-crown-6 (DIODB18C6), Dibenzo-21-crown-7 (DB21C7), Bis-4,4'(5')[1-hydroxy-2-ethylhexyl]benzo-18-crown-6 (CROWN XVII), Di-tert-butyldicyclohexano-18-crown-6 (DTBDCH18C6), Di-isooctyldicyclohexano-18-crown-6 (DIODCH18C6), Dicyclohexano-18-crown-6 (DCH18C6), Bis-4,4'(5')[1-hydroxyheptyl]cyclohexo-18-crown-6 (CROWN XVI), Dibenzo-18-crown-6 (DB18C6), Dibenzo-24-crown-8 (DB24C8), Dibenzo-30-crown-10 (DB30C10). Mit Ausnahme von DB18C6, DB21C7, DB24C8 und DB30C10 zeigen alle aufgezählten Kronenether eine höhere Lösbarkeit in organischen, insbesondere Paraffinverdünnungsmitteln, und weniger Verluste bei organischen Wasserkontakten mit Beibehalten einer hohen Selektivität für zu entzogene Radionuklid-Kationen, laut Literaturquellen, auf.

Bekannt sind Extraktionsverfahren des Cäsiums aus Wasserlösungen, die auch weitere lone enthalten, mit Hilfe Extraktionsgemische auf Basis der Kronenether Bis-4,4'(5)-(hydroxy-alcyl-benzo)-18-crown-6 in einem organischen Verdünnungsmittel, das Tri-n-butylphosphat oder Methylisobutylceton enthält, mit nachfolgendem Kontakt der erhaltenen organischen Lösung mit der Lösung einer Mineralsäure (US, 5888398, A).

Bekannt sind Extraktionsverfahren Cäsiums aus Wasser-Alkali-Abfällen, die eine größere Menge anderer lone der Alkalimetalle, wie Natrium und Kalium, enthalten, mit Hilfe von Extraktionsgemischen auf Basis Calix[4]aren-Kronenether im unpolaren kohlenhydrathaltigen Lösungsmittel, zum Beispiel Calix[4]aren-(bis-tert-octylbenzo-crown-6) im aliphatischen Petroleum (US, 6174503, B1).

Bekannt ist selektive Extraktion von Cäsium-135 mit Hilfe eines Extraktionsgemisches, das Tert-butylbenzo-21-crown-7 (tBB21C7) und Natriumtetraphenylborat enthält (FR, 2700709, A1).

Bekannt ist ein Gemisch, das Dibenzo-21-crown-7 in Konzentration 0,1-0,2 mol/l im organischen Lösungsmittel 2,2-dihydrotrifluorethylpentafluorethylether enthält, zur Cäsiumextraktion aus wässrigem salpetersauerem Milieu (SU, 1693438, A1).

Bekannt sind Verfahren zur aufeinander folgenden Extraktion von Cäsium und Strontium aus angesäuerten Lösungen radioaktiver Abfälle; Cäsiumextraktion mit Hilfe eines Extraktionsmittels, bestehend vorzugsweise aus Bis-4,4'(5')[1-hydroxy-2-ethylhexyl]benzo-18-crown-6 (im weiteren - Crown XVII), mit flüssigen Kationenaustauschern Dinonylnaphtalene Sulfonic Acid oder Didodecylnaphthalene Sulphonic Acid und Strontiumextraktion mit Hilfe eines Extraktionsmittels, bestehend vorzugsweise aus Bis-4,4'(5')[1-hydroxyheptyl]cyclohexo-18-crown-6 (im weiteren Crown XVI) mit denselben Kationenaustauschern im Matrixllösung, die Tributylphosphat und Petroleum enthält (US, 4749518, A). Als Nachteil dieses Verfahrens zur gemeinsamen Extraktion von Strontium und Cäsium kann Senkung des Verteilungsfaktors Strontiums und Cäsiums im Prozess der Radionuklidextraktion infolge niedriger Strahlungsimmunität der Komponenten im Extraktionsgemisch.

Bekannt ist Extraktionsverfahren von Strontium, Neptunium, Americium und Plutonium aus wässrigen salpetersaueren Lösungen mit Hilfe eines Extraktionsgemisches, das ein Kronenether, z. B. 4,4'(5')[R, R']dicyclohexano-18-crown-6, wo R und R' aus der Gruppe gewählt sind, die Methyl, Propyl, Isobutyl, t-Butyl, Hexyl, Heptyl und n-octyl(phenyl)-N,N-diisobutylcarbamoylmethylphosphinoxid enthält, in einem Lösungsmittel, das aus der Gruppe gewählt ist, die Tri-n-butylphosphat, gasförmiges Paraffin und Isoparaffin enthält (US, 5169609, A).

Der allgemeine Nachteil der o. g. Verfahren besteht in Strahlungsimmunität der Extraktionsmittel bei Dauerarbeit des Extraktionszyklus.

Bekannt sind Extraktionsverfahren des Strontiums-90 und Cäsiums-135-137 mit Hilfe von strahlungsbeständigen Extraktionsmitteln, die Kronenether mit verschiedenen Verdünnungsmitteln enthalten.

Es ist zum Beispiel ein Verfahren zur Extraktion der Metalle, wie Plutonium, Uran und Strontium, aus Wasserlösungen mit der Nutzung cis-sin-cis-Isomers von Dicyclohexano-18-crown-6 (DCH18C6) im organischen Lösungsmittel, wie Nitrobenzol oder Dichlorethan, oder in fester Phase, wie Silizium (FR, 2656149, A), bekannt.

Bekannt ist ein Verfahren zum Neutralisation radioaktiver salpetersauerer Lösungen, die Strontium und Natrium in Konzentrationen von 0,01 bis 0,2 mol/l enthalten, mit Hilfe einer Mischung, die Dicyclohexano-18-crown-6 (DCH18C6) und ein Lösungsmittel, wie Chloroform CHCl₃; 1,1,2,2-tetrachlorethan, Dichlormethan, Nitrobenzol, Brombenzol, die sich im Kationenaustauschharz (FR, 2707416, A1) befinden, enthält.

Die Anwendung der genannten Extraktionsgemische und Verdünnungsmittel beseitigte doch wesentliche Verluste an Kronenethern infolge ihres Herausspülens durch Wasserlösungen bei Reextraktion von Radionukliden nicht, obwohl diese Anwendung eine höhere Strahlungsimmunität und einen für industrielle Nutzung annehmbaren Verteilungsfaktor des Cäsiums und Strontiums aufzeigte.

Das Ziel der vorliegenden Erfindung ist Extraktionsmittel und Verfahren bereitzustellen, um Radionuklide, zuzüglich des Strontiums und Cäsiums, aus flüssigen hochaktiven Abfällen, die auch weitere Maktoverunreinigungen enthalten, insbesondere des Natriums, dessen Einfluss auf Extraktionsparameter der Extraktionsgemische sehr hoch ist, zu extrahieren.

Bei Schaffung der vorliegenden Erfindung wurde Aufgabe gestellt, die Komplexbildner enthaltenden Extraktionsmittel bereitzustellen, die über eine hohe Selektivität, Radionuklide, zum Beispiel Cäsium- und Strontiumkationen, aufzunehmen, sowie über eine schwächere Zusammenwirkung mit den anderen in hochaktiven Abfällen enthaltenden Ionen verfügen, zum Beispiel mit dem Natrium, im organischen Lösungsmittel, das in wasserorganischen Kontakten Komponenten der Extraktionsmittel und Assoziate mit den zu entzogenen Ionen der Radionulkide z. B. Cäsiums und/oder Strontiums, festhalten kann, um deren Herausspülen mit Abwasser zu verhindern. Es ist auch die Aufgabe gestellt, ein Verfahren zur wirksamen Regeneration des Extraktionsmittels mit dessen nachfolgender Rückführung in den technologischen Prozess zu entwickeln.

Den Erfindern ist die Anwendung polyfluoriertes Alkohol-Telomer 1,1,7-trihydrododecafluorheptanol-1 als Bestandteil des Reaktionsmediums in der Herstellung von Fluorpolymeren bekannt. Bekannt ist auch das Verfahren zur Extraktion von Strontiumradionukliden aus salpetersaueren Abfällen der Atomenergetik mittels eines Extraktionsgemisches, das enthält eine Lösung von Dicyclohexyl-18-crown-6 (DCH18C6) im organischen Verdünnungsmittel, das ein Gemisch aus Alkohol-Telomer 1,1,7-trihydrododecafluorheptanol-1 und 2,4-diethyloctanol darstellt. Das Verfahren beinhaltet Inkontaktbringen der Abfälle mit dem Extraktionsgemisch, Waschen des Extraktes und Reextraktion des Strontiums mit Destillierwasser (SU, 1706661, A1). Dabei beträgt der Gehalt des Kronenethers im Extraktionsmittel 0,1-0,2 mol/l im Gemisch des Verdünnungsmittels aus 60-65 % 1,1,7-trihydrododecafluorheptanol-1 und 40-35 % 2,4-diethyloctanol.

Die Erfinder lösten die gestellte Aufgabe mittels Anwendung von polyfluoriertem Alkohol-Telomer 1,1,7-trihydrododecafluorheptanol-1 mit Summenformel H(CF₂CF₂)ₙCH₂OH mit n = 3 (im weiteren Fluorheptanol n₃) als Verdünnungsmittel für die Lösungen, die makrozyklische Verbindungen enthalten, gewählt aus der Gruppe von Kronenethern mit aromatischen Fragmenten, die Alkyl- und/oder Hydroxyalkylsubstituenten linearen und/oder verzweigten Baus haben, und/oder mit Cyclohexanfragmenten, die Alkyl- und/oder Hydroxyalkylsubstituenten linearen und/oder verzweigten Baus enthalten, und/oder mit Fragmenten -O-CHR-CH₂O- mit R = normales oder verzweigtes Alkyl bzw. Hydroxyalkyl.

Die gestellte Aufgabe wurde gelöst durch Entwicklung eines Extraktionsmittels für Extraktion von Radionukliden aus saueren Wasserlösungen hochaktiver Abfälle, die in der radiochemischen Produktion anfallen und auch weitere Makroverunreinigungen enthalten, zuzüglich Natriums. Das Extraktionmittel enthält eine makrozyklische Verbindung, die Radionuklid-lone aufnehmen kann, im organischen Lösungsmittel, in dem makrozyklische Verbindung aus der Gruppe von Kronenethern gewählt wird, die aromatische Fragmente mit Alkyl- und/oder Hydroxyalkylsubstituenten linearen und/oder verzweigten Baus, und/oder Cyclohexanfragmente mit Alkyl- und/oder Hydroxyalkylsubstituenten linearen und/oder verzweigten Baus und/oder Fragmente -O-CHR-CH₂O- mit R = normales oder verzweigtes Alkyl bzw. Hydroxyalkyl enthalten, wobei das organische Lösungsmittel polyfluoriertes Alkohol-Telomer 1,1,7-trihydrododecafluorheptanol hat.

Erfindungsgemäß kann das organische Lösungsmittel im Extraktionsmittel ein Gemisch aus Polyoxyethylenglycolether von synthetischen primären höheren Fettalkoholen der Fraktion C₁₂ - C₁₄ mit Allgemeinformel CnH₂ₙ₊₁O(C₂H₄O)ₘH mit n = 12÷14, m = 2 zusätzlich enthalten.

Dabei ist es erfindungsgemäß zweckmäßig, dass organisches Lösungsmittel im Extraktionsmittel folgende Komponentenzusammensetzung in Vol.-% enthält: polyfluoriertes Alkohol-Telomer

| | |
|---|---|
| 1,1,7-trihydrododecafluorheptanol | 80 - 99, |
| das Gemisch von Polyoxyethylenglycoletheren | |
| synthetischer primärer höherer Fettalkohole | |
| der Fraktion C₁₂ - C₁₄ | 20 - 1. |

Außerdem kann das Extraktionsmittel der Extraktion der Radionuklide Cäsiums aus den Cäsiumkationen enthaltenden Abfällen angepasst werden und auch ein Kronenether erfindungsgemäß enthalten, gewählt aus der Gruppe: Di-tert-butyldibenzo-18-crown-6 (DTBDB18C6), Di-isooctyldibenzo-18-crown-6 (DIODB18C6), Dibenzo-21-crown-7 (DB21C7), Bis-4,4'(5')[1-hydroxy-2-ethylhexyl]benzo-18-crown-6 (Crown XVII).

Dabei ist es erfindungsgemäß zweckmäßig, dass das Extraktionsmittel zur Extraktion der Radionuklide Cäsiums das Konenether Dibenzo-21-crown-7 mit der Extraktionsmittelkonzentration von ca. 0,04 mol/l bis ca. 0,1 mol/l des s enthält.

Außerdem kann das Extraktionsmittel der Extraktion der Radionuklide Strontiums aus den Strontiumkationen enthaltenden Abfällen angepasst werden und auch ein Kronenether erfindungsgemäß enthalten, gewählt aus der Gruppe: Di-tert-butyldicyclohexano-18-crown-6 (DTBDCH18C6), Di-isooctyldicyclohexano-18-crown-6 (DIODCH18C6), Dicyclohexano-18-crown-6 (DCH18C6), Bis-4,4'(5')[1-hydroxyheptyl]cyclohexo-18-crown-6 (Crown XVI).

Dabei ist es erfindungsgemäß zweckmäßig, dass das Extraktionsmittel zur Extraktion der Radionuklide Strontiums das Konenether Dicyclohexano-18-crown-6 mit der Extraktionsmittelkonzentration von ca. 0,04 mol/l bis ca. 0,1 mol/l des s enthält.

Außerdem kann das Extraktionsmittel der gemeinsamen Extraktion von Strontium und Cäsium aus den Strontium- und Cäsiumkationen enthaltenden Abfällen angepasst werden und ein Gemisch von Kronenethern erfindungsgemäß enthalten, in dem wenigsten ein Kronenether aus der Gruppe gewählt wird, die enthält Di-tert-butyldibenzo-18-crown-6 (DTBDB18C6), Di-isooctyldibenzo-18-crow-6 (DIODB18C6), Dibenzo-21-crown-7 (DB21C7), Bis-4,4'(5')[1-hydroxy-2-ethylhexyl]benzo-18-crown-6 (CROWN XVII), und wenigstens ein Kronenether aus der Gruppe, die Di-tert-butyldicyclohexano-18-crown-6 (DTBDCH18C6), Di-isooctyldicyclohexano-18-crown-6 (DIODCH18C6), Dicyclohexsano-18-crow-6 (DCH18C6), Bis-4,4'(5')[1-hydroxyheptyl]cyclohexo-18-crown-6 (CROWN XVI) enthält.

Dabei ist es erfindungsgemäß zweckmäßig, dass organisches Lösungsmittel im Extraktionsmittel folgende Komponentenzusammensetzung in Vol.-% enthält:

| | |
|---|---|
| polyfluoriertes Alkohol-Telomer | |
| 1,1,7-trihydrododecafluorheptanol-1- | 87 % |
| das Gemisch von Polyoxyethylenglycoletheren | |
| synthetischer primärer höherer Fettalkohole | |
| der Fraktion C₁₂ - C₁₄ | 13 % |

Dabei ist es erfindungsgemäß zweckmäßig, dass das Extraktionsmittel zur gemeinsamen Extraktion des Cäsiums und Strontiums das Gemisch aus Dicyclohexyl-18-crown-6 und Dibenzo-21-crown-7 enthält.

Dabei, laut der Erfindung, ist es zweckmäßig, dass das Extraktionsmittel zur gemeinsamen Extraktion die Konzentration jedes Kronenethers von ca. 0,04 mol/l bis ca. 0,1 mol/l hat.

Die gestellte Aufgabe wurde auch gelöst durch Entwicklung eines Verfahrens zur Regeneration des gebrauchten Extraktionsmittels, das Komplexe einer makrozyklischen Verbindung enthält, gewählt der Gruppe von Kronenethern mit aromatischen Fragmenten, enthaltend Alkyl- und/oder Hydroxyalkylsubstituenten linearen und/oder verzweigten Baus, und/oder mit Zyklohexanfragmenten, enthaltend Alkyl- und/oder Hydroxyalkylsubstituenten linearen und/oder verzweigten Baus, und/oder mit Fragmenten -O-CHR-CH₂O- mit R = normales oder verzweigtes Alkyl oder Hydroxyalkyl, im organischen Lösungsmittel, das polyfluoriertes Alkohol-Telomer 1,1,7-trihydrododecafluorheptanol-1 enthält, mittels Bearbeitung des gebrauchten Extraktionsmittels mit Wasserlösung Kalium-Ethylen-Diamintetraazetat mit pH von ca. 8,0 bis ca. 9,0.

Dabei ist es erfindungsgemäß zweckmäßig, Konzentration von Kalium-Ethylen-Diamintetraazetat in der Wasserlösung im Bereich von ca. 0,02 mol/l bis ca. 0,03 mol/l zu wählen.

Dabei ist es erfindungsgemäß sinnvoll, den pH-Wert durch Kaliumhydroxid-Zusatz einzustellen.

Die gestellte Aufgabe wurde auch gelöst durch Entwicklung des Verfahrens zur Extraktion der Radionuklide aus der saueren Wasserlösung hochaktiver Abfälle, die in der radiochemischen Produktion anfallen und auch andere Makroverunreinigungen enthalten, zuzüglich des Natriums. Im Verfahren wird die Wasserlösung der Abfälle mit dem Extraktionsmittel bearbeitet, das eine makrozyklische Verbindung enthält, die Radionuklid-lone aufnehmen kann, gewählt aus der Gruppe der Kronenether mit aromatischen Fragmenten, die enthalten Alkyl- und/oder Hydroxyalkylsubstituenten linearen und/oder verzweigten Baus, und/oder mit Cyclohexanfragmenten, die enthalten Alkyl- und/oder Hydroxyalkylsubstituenten linearen und/oder verzweigten Baus, und/oder mit Fragmenten -O-CHR-CH₂O- mit R = normales oder verzweigtes Alkyl oder Hydroxyalkyl, im organischen Lösungsmittel, das polyfluoriertes Alkohol-Telomer 1,1,7-trihydrododecafluorheptanol-1 enthält, mit der Bildung des Extraktes und mit Reextraktion von Radionukliden aus dem Extrakt mittels entionisierten Wassers.

Dabei kann das organische Lösungsmittel im Extraktionsmittel zusätzlich eine Mischung von Polyoxyethylenglycoletheren synthetischer primärer höchster Fettalkohole der Fraktion C₁₂ - C₁₄ (im weiteren Syntanol) enthalten.

Dabei ist es erfindungsgemäß zweckmäßig, dass organisches Lösungsmittel im Extraktionsmittel folgende Komponentenzusammensetzung in Vol.-% enthält: polyfluoriertes Alkohol-Telomer

| | |
|---|---|
| 1,1,7-trihydrododecafluorheptanol | 80 - 99, |
| das Gemisch von Polyoxyethylenglycoletheren | |
| synthetischer primärer höherer Fettalkohole | |
| der Fraktion C₁₂ - C₁₄ | 20-1. |

Außerdem kann erfindungsgemäß das Extraktionsverfahren der Extraktion von Cs-Radionukliden angepasst werden und das Extraktionsmittel ein Kronenether enthalten, gewählt aus der Gruppe: Di-tert-butyldibenzo-18-crown-6 (DTBDB18C6), Di-isooctyldibenzo-18-crown-6 (DIODB18C6), Dibenzo-21-crown-7 (DB21C7), Bis-4,4'(5')[1-hydroxy-2-ethylhexyl]benzo-18-crown-6 (Crown XVII).

Dabei ist es erfindungsgemäß zweckmäßig, dass das Extraktionsmittel Dibenzo-21-crown-7 in der Konzentration von ca. 0,04 mol/l bis ca. 0,1 mol/l enthält. Außerdem kann erfindungsgemäß das Extraktionsverfahren an Extraktion von StrontiumRadionukliden angepasst werden und das Extraktionsmittel ein Kronenether enthalten, gewählt aus der Gruppe: Di-tert-butyldicyclohexano-18-crown-6 (DTBDCH18C6), Di-isooctyldicyclohexano-18-crown-6 (DIODCH18C6), Dicyclohexano-18-crown-6 (DCH18C6), Bis-4,4'(5')[1-hydroxyheptyl]cyclohexo-18-crown-6 (Crown XVI).

Dabei ist es erfindungsgemäß zweckmäßig, dass das Extraktionsmittel zur Extraktion der Radionuklide Strontiums Dicyclohexano-18-crown-6 in Konzentration von ca. 0,04 mol/l bis ca. 0,1 mol/l enthält.

Erfindungsgemäß kann das Verfahren der gemeinsamen Extraktion der Radionuklide von Strontium und Cäsium angepasst werden und das Extraktionsmittel ein Gemisch von Kronenethern enthalten, in dem wenigstens ein Kronenether aus der Gruppe gewählt wird, die enthält Di-tert-butyldibenzo-18-crown-6 (DTBDB18C6), Di-isooctyldibenzo-18-crow-6 (DIODB18C6), Dibenzo-21-crown-7 (DB21C7), Bis-4,4'(5')[1-hydroxy-2-ethylhexyl]benzo-18-crown-6 (CROWN XVII), und wenigstens ein Kronenether aus der Gruppe, die Di-tert-butyldicyclohexano-18-crown-6 (DTBDCH18C6), Di-isooctyldicyclohexano-18-crown-6 (DIODCH18C6), Dicyclohexsano-18-crow-6 (DCH18C6), Bis-4,4'(5')[1-hydroxyheptyl]cyclohexo-18-crown-6 (CROWN XVI) enthält.

Erfindungsgemäß ist es dabei bevorzugt, dass das organische Lösungsmittel folgende Komponentenzusammensetzung in Vol.-% hat: polyfluoriertes Alkohol-Telomer 1,1,7-trihydrododecafluorheptanol-1 87% und das Gemisch von Polyoxyethylenglycoletheren der synthetischen primären höheren Fettalkohole der Fraktion C₁₂ - C₁₄ 13 %.

Erfindungsgemäß ist es auch zweckmäßig, dass das Extraktionsmittel die Mischung von Dicyclohexyl-18-crown-6 und Dibenzo-21-crown-7 enthält. Dabei ist es erfindungsgemäß zweckmäßig, dass Konzentration jedes Kronenethers im Gemisch von ca. 0,04 mol/l bis ca. 0,1 mol/l beträgt.

Erfindungsgemäß wurde die gestellte Aufgabe auch durch Entwicklung eines Verfahrens gelöst, in dem zusätzlich Extraktion eines umlaufenden Extraktionsmittels und seine Regeneration zur weiteren Verwendung mittels Bearbeitung mit Wasserlösung von Kalium-Ethylen-Diamin-tetraacetat mit pH von 0,8 bis 0,9 durchgeführt wird.

Dabei ist es erfindungsgemäß zweckmäßig, die Konzentration von Kalium-Ethylen-Diamin-tetraacetat in der Wasserlösung im Bereich von ca. 0,02 mol/l bis ca. 0,03 mol/l zu wählen. Dabei ist es erfindungsgemäß sinnvoll, den pH-Wert durch Zusatz des Kaliumhydroxids einzustellen.

Außerdem werden erfindungsgemäß alle Verfahrensschritte der Extraktion von Radionukliden im dynamischen Gegenstrombetrieb durchgeführt.

Im Folgenden wird die Erfindung durch Beschreibung konkreter Ausführungsbeispiele erklärt. Bei der Beschreibung konkreter Ausführungsbeispiele werden wegen Klarheit Fachbegriffe im engeren Sinne verwendet, die Erfindung aber wird dadurch nicht begrenzt. Man muss im Auge halten, dass jeder Begriff alle äquivalenten Begriffe umfasst, die zur Lösung ähnlicher Aufgaben verwendet werden.

### 1. Erfindungsgemäße Selektivität der Extraktionsmittel, Radionuklide zu extrahieren.

### 1.1. Selektivität der Extraktionsmittel auf Basis Kronenether in verschiedenen Lösungsmitteln.

Es wurden untersucht Verteilungsfaktoren der Radionuklide, zum Beispiel Strontiums oder Cäsiums, während Extraktion mittels erfindungsgemäßer Extraktionsmittel, die als Komplexbildner verschiedene Kronenether enthalten: Di-tert-butyldibenzo-18-crown-6 (im weiteren DTBDB18C6), Di-isooctyldibenzo-18-crown-6 (im weiteren DIODB18C6), Di-tert-butyldicyclohexano-18-crown-6 (im weiteren DTBDCH18C6), Di-isooctyldicyclohgxano-18-crown-6 (im weiteren DIODCH18C6), Dicyclohexano-18-crown-6 (im weiteren DCH18C6) oder Dibenzo-21-crown-7 (im weiteren DB21C7) im organischen Verdünnungsmittel, gemäß der Erfindung polyfluoriertem Alkohol-Telomer 1,1,7-trihydrododecafluorheptanol-1 (im weiteren Fluorheptanol n₃).

Zum Vergleich wurden Verteilungsfaktoren des Strontiums und Cäsiums bei Verwendung der Extraktionsmittel, die ähnliche Kronenether in einem anderen organischen Verdünnungsmittel, im Dekan, enthalten, bestimmt.

Für Versuche wurden experimentelle salpetersauere Wasserlösungen, die Strontium und Cäsium in Konzentration 1 g/l und Salpetersäuregehalt ca. 3,0 mol/l enthalten, genommen.

Die erhaltenen Verteilungsfaktoren des Strontiums und Cäsiums für verschiedene Extraktionssysteme Nº 1-12 sind in Tabelle 1 vorgestellt.

**Tabelle 1**

| Verteilungsfaktoren des Strontiums und Cäsiums bei Extraktion mittels organischer Lösungen der Kronenether | | | | | |
|---|---|---|---|---|---|
| Kronenether, 0,1 mol/l | System-Nr. | Verdünnungsmittel | Verteilungsfaktor | | Anmerkungen |
| | | | Strontium | Cäsium | |
| DTBDB18C6 | 1 | Dekan | - | - | ein Gel in organischer Phase |
| | 2 | Fluorheptanol n₃ | 0,11 | 15,45 | |
| DIODB18C6 | 3 | Dekan | 0,05 | 0,004 | |
| | 4 | Fluorheptanol n₃ | 0,06 | 4,23 | |
| DTBDCH18C6 | 5 | Dekan | <0,001 | - | |
| | 6 | Fluorheptanol n₃ | 1,91 | - | |
| DIODCH18C6 | 7 | Dekan | <0,001 | 0,004 | |
| | 8 | Fluorheptanol n₃ | 0,106 | - | |
| DCH18C6 | 9 | Dekan | - | - | dritte Phase |
| | 10 | Fluorheptanol n₃ | 1,6 | - | |
| DB21 C7 | 11 | Dekan | - | - | unlöslich |
| | 12 | Fluorheptanol n₃ | - | 10,7 | |

Aus Daten in Tabelle 1 folgt, dass wegen niedriger Verteilungsfaktoren des Strontiums und Cäsiums Verwendung der Extraktionssysteme mit Kronenethern in Paraffinen, wie Dekan, praktisch unmöglich ist.

Die Größe der Alkylkette beeinflusst Extraktionseigenschaften der Kronenether wesentlich, indem wahrscheinlich sterische Schwierigkeiten bei der Kationunterbringung im Hohlraum des Makrozyklus entstehen. Die Verteilungsfaktoren des Strontiums haben für die organischen Lösungen DCH18C6 (das System Nº 10) und DTBDCH18C6 (das System Nº 6) im Fluorheptanol n3 ungefähr die gleiche Größe (1,91 und 1,6), aber mit Vergrößerung der Anzahl der Kohlenstoffatome im angegliederten Radikal, zum Beispiel bis Isooctyl-Kette (das System Nº 8) verringert sich der Faktor mehr als um eine Ordnung. Cäsiumextraktion ist mit Verwendung der Extraktionsmittel, die abgeleiteten Dibenzo-Kronenether enthalten, nur im Fluorheptanol n₃ wirksam. Es sei dabei betont werden, dass sich mit Vergrößerung der Anzahl der Kohlenstoffatome in der Alkyl-Kette des Substituenten die Verteilungsfaktoren des Cäsiums, bestimmt in den identischen Bedingungen des Experimentes (die Systeme Nº 2 und Nº 4), wesentlich verringern.

### 1.2. Die Lösbarkeit der Extraktionsmittel auf Basis der Kronenether bei säurehaltigen und organischen Wasserkontakten.

Es wurde die Lösbarkeit der erfindungsgemäßen Extraktionsmittel und der Extraktionsmittel, die ähnliche Kronenether in anderen Lösungsmitteln, wässrig und salpetersauer, enthalten, untersucht.

Für Versuche wurden die Extraktionsmittel, die Kronenether DCH18C6 oder DB21C7 in Konzentration 0,1 mol/l in verschiedenen organischen Verdünnungsmitteln enthalten, genommen. Die Extraktionsmittel vermischte man mit wässrigen oder salpetersaueren Lösungen mit Salpetersäuregehalt 3mol/l im geschlossen thermostatisierten Behälter im Laufe von 3 Stunden. Dann wurden die erhaltenen organischen Wassersysteme abgetrennt. Der Wasserteil nach Fällung und Filterung wurde auf Kronenether nach fotometrischen Methoden analysiert. Die Ergebnisse der Versuche sind in Tabelle 2 vorgestellt.

**Tabelle 2**

| Lösbarkeit der Kronenether im Wasser und in der Salpetersäure bei Verwendung in Extraktionsmitteln mit verschiedenen organischen Verdünnungsmitteln | | | | | | |
|---|---|---|---|---|---|---|
| Nº | Verdünnungsmittel | Konzentration des Kronenethers in der Wasserphase, mol/l x 10⁻³ | | | | Anmerkung |
| | | DCH18C6 | | DB21C7 | | |
| | | HNO₃ | H₂O | HNO₃ | H₂O | |
| 1 | Tetrachlotethan | 0,139 | 0,258 | 0,159 | 0,173 | |
| 2 | Trichlorethylen | 0,94 | 0,65 | 0,218 | 0,188 | |
| 3 | Tetrachlorpropan | 1,72 | 0,968 | - | - | nicht lösbar |
| 4 | Trichlorbenzol | 2,016 | 1,142 | 0,173 | 0,168 | |
| 5 | 2,2-dihydrotrifluorethyl-pentafluorethyl ether | 0,344 | 0,301 | 0,112 | 0,071 | |
| 6 | Fluorheptanol n₃ | 0,086 | <0,027 | 0,068 | <0,025 | |

Die Ergebnisse der Untersuchungen in Tabelle 2 zeigen, dass minimale Lösbarkeit der Kronenether in den wässrigen und salpetersaueren Lösungen bei Extraktionsmitteln auf Basis der erfindungsgemäßen Kronenether im Fluorheptanol n3 beobachtet wird.

### 1.3. Selektivität der erfindungsgemäßen Extraktionsmittel je nach Zusammensetzung der verarbeiteten Abfälle.

Es wurden Unterschiede in der Zusammensetzung der Lösungen von hochaktiven Abfällen, die Selektivität der erfindungsgemäßen Extraktionsmittel beeinflussen, untersucht.

### 1.3.1. Bestimmung der Lösungskomponenten, die Extraktion der Radionuklide beeinflussen.

Es wurde die Zusammensetzung der tatsächlichen Ausgangslösungen 1 und 2, die mittels Extraktion behandelt wurden, bestimmt. Dabei stellte die Lösung 1 Imitation des verdampften Raffinats der behandelten Brennstoffelemente dar, die am häufigsten in Russland verwendet wird, und die Lösung 2 Imitation flüssiger hochaktiver Abfälle, die am häufigsten in den USA (INEEL) verwendet wird. Durchschnittliche Zusammensetzung ist in Tabelle 3 vorgestellt.

**Tabelle 3**

| Durchschnittliche Zusammensetzung hochaktiver Abfälle | | | |
|---|---|---|---|
| Nº | Element | Konzentration des Elementes, g/l | |
| | | Lösung Nr.1 | Lösung Nr.2 |
| 1 | Na | 10,0 | 33,12 |
| 2 | K | 0,2 | 7,43 |
| 3 | Cs | 0,7 | 5,2 x 10-3 |
| 4 | Mg | 0,2 | - |
| 5 | Ca | 1,0 | 2,6 |
| 6 | Sr | 0,5 | 5,7 x 10-3 |
| 7 | Ba | 0,3 | - |
| 8 | Al | 7,0 | 20,25 |
| 9 | Seltenerdelemente | Bis 20,0 | - |
| 10 | Si | 0,02 | - |
| 11 | Zr | 0,2 | 0,9 |
| 12 | Pb | 0,2 | 0,17 |
| 13 | Cr | 1,0 | 0,26 |
| 14 | Mn | 1,5 | - |
| 15 | Fe | 5,0 | 1,17 |
| 16 | Ni | 2,0 | 0,1 |
| 17 | Mo | 0,2 | 0,048 |
| 18 | HNO₃ | 120 | 102 |

Aus Tabelle 3 ist ersichtlich, dass der Hauptunterschied in der Zusammensetzung der Lösungen 1 und 2, der die Prozesse der Radionuklidextraktion beeinflussen kann, in einer hohen Konzentration von Makroverunreinigungen, zum Beispiel Natrium und Kalium, im Hintergrund einer niedrigen Konzentration der zu entziehenden Elemente liegt.

### 1.3.2. Bestimmung der Salpetersäurekonzentrationen in der Ausgangslösung, die Extraktion des Natriums mit erfindungsgemäßen Extraktionsmitteln beeinflussen.

Untersucht wurden Extraktionsmittel, die Kronenether enthalten: DB18C6, DTBDB18C6, DCH18C6 oder DB21C7 in Konzentration 0,1 mol/l im Fluorheptanol n₃. Als experimentelle Lösungen verwendete man Wasserlösungen des salpetersaueren Natriums, dessen Konzentration anhand vorerst eingeführter Aliquote des Isotops Natrium-22 radiometrischbestimmt wurde. Ergebnisse der Versuche sind in Tabelle 4 vorgestellt.

**Tabelle 4**

| Einfluss der Salpetersäurekonzentration auf Natriumextraktion mit erfindungsgemäßen Extraktionsmitteln | | | | |
|---|---|---|---|---|
| Salpetersäurekonzentration, mol/l | Verteilungsfaktor des Natriums | | | |
| | DB18C6 + Fluorheptanol n3 | DTBD818C6 + Fluorheptanol n3 | DCH18C6 + Fluorheptanol n3 | DB21C7 + Fluorheptanol n3 |
| 0 | 0,025 | 0,03 | 0,1 | 0 |
| 0,1 | 0,04 | 0,04 | 0,12 | 0 |
| 0,5 | 0,15 | 0,17 | 0,12 | 0,005 |
| 1,0 | 0,21 | 0,27 | 0,05 | 0,01 |
| 3,0 | 0,49 | 0,55 | 0,02 | 0,1 |
| 5,0 | 0,67 | 0,64 | 0,01 | 0,12 |

Aus Tabelle 4 ist ersichtlich, dass Extraktionsmittel, die Kronenether DB18C6 und DTBDB18C6 enthalten, minimale Verteilungsfaktoren des Natriums in den Lösungen mit Salpetersäurekonzentrationen von 0 bis 0,1 mol/l haben, wonach sich Extraktion des Natriums erhöht. Das Extraktionsmittel, das DB21C7 enthält, extrahiert das Natrium im Konzentrationsbereich der Salpetersäure von 0 bis 0,1 mol/l praktisch nicht und bei höheren Salpetersäurekonzentrationen unwesentlich. Das Extraktionsmittel, das DCH18C6 enthält, hat in niedrigeren Konzentrationsbereichen der Salpetersäure von 0 bis 0,5 molll kleinere Verteilungsfaktoren des Natriums und mit Erhöhung der Salpetersäurekonzentration in der Ausgangslösung über 0,5 mol/l sinkt Natriumextraktion praktisch auf Null.

### 1.3.3. Bestimmung der Natriumkonzentrationen, die Extraktion der Radionuklide mit Hilfe erfindungsgemäßer Extraktionsmittel beeinflussen.

Extraktion wurden Ausgangslösungen, die 1 g/l Cäsium enthalten, in der Salpetersäure mit Konzentration 3,0 mol/l und verschiedenen Natriumkonzentrationen untergezogen. Die Lösungen wurden mit erfindungsgemäßen Extraktionsmitteln behandelt, die Kronenether DTBDB18C6 in Konzentrationen 0,1 mol/l im Fluorheptanol n₃ enthalten. Die Ergebnisse der Untersuchungen sind in Tabelle 5 dargestellt.

**Tabelle 5**

| Einfluss der Natriumkonzentration auf Extraktion des Cäsiums mit Hilfe erfindungsgemäßer Extraktionsmittel | | |
|---|---|---|
| Versuch- Nr. | Konzentration des Natriumnitrats in der Ausgangslösung, mol/l | Verteilungsfaktor des Cäsiums |
| 1 | 0 | 16,0 |
| 2 | 0,02 | 9,0 |
| 3 | 0,03 | 9,1 |
| 4 | 0,04 | 9,3 |
| 5 | 0,20 | 3,0 |

Aus der Tabelle 5 ist ersichtlich, dass selbst unbedeutende Konzentrationen des Natriumnitrats in der Ausgangslösung die Verteilungsfaktoren des Cäsiums verringern, indem sie Kapazität des Extraktionsmittels einnehmen.

Es wurden Eigenschaften der erfindungsgemäßen Extraktionsmittel zur Natriumextraktion aus saueren Wasserlösungen hochaktiver Abfälle untersucht, wofür Natriumkonzentrationen in organischer und Wasserphase, die Extraktionsmittel auf Basis DTBDB18C6 oder DCH18C6 oder DB21C7 in Konzentrationen 0,05 mol/l im Fluorheptanol n₃ enthält, analysiert wurden. Die Ergebnisse sind in Tabelle 6 dargestellt.

**Tabelle 6**

| Zusammenwirkung der erfindungsgemäßen Extraktionsmittel mit Natrium | | | |
|---|---|---|---|
| Versuch-Nr. | Extraktionsmittel | Natriumkonzentration in mol/l | |
| | | In organischer Phase | In Wasserphase |
| 1 | DTBDB18C6 + | 0 | 0,01 |
| 2 | Fluorheptanol n₃ | 0,035 | 0,1 |
| 3 | | 0,07 | 0,2 |
| 4 | | 0,14 | 0,4 |
| 5 | DCH18C6 + | 0 | 0,01 |
| 6 | Fluorheptanol n₃ | 0,003 | 0,1 |
| 7 | | 0,005 | 0,2 |
| 8 | | 0,009 | 0,4 |
| 9 | DB21 C7 + | 0 | 0,01 |
| 10 | Fluorheptanol n₃ | 0,01 | 0,1 |
| 11 | | 0,018 | 0,2 |
| 12 | | 0,035 | 0,4 |

Aus Tabelle 6 kann die Schlussfolgerung gemacht werden, dass erfindungsgemäße Extraktionsmittel auf Basis nichtalkylierter Kronenether DCH18C6 und DB21C7 niedrigere Verteilungsfaktoren des Natriums im Vergleich zum Extraktionsmittel, das nichtalkyliertes Kronenether DTBDB18C6 enthält, haben. Diese Eigenschaft ist wichtig bei der Auswahl der Extraktionsmittel zur Extraktion der Radionuklide aus hochaktiver Abfälle, die Natrium in einer bedeutenden Menge enthalten, zum Beispiel aus hochkonzentrierten Lösungen mit Natriumkonzentration 0,4 mol/l, was der Natriumkonzentration ca. 10 g/l und mehr entspricht, wobei Kapazität des Komplexbildners ausreichend frei bleibt, um Radionuklide zu extrahieren.

### 1.3.4. Bestimmung der Salpetersäurekonzentrationen, die Extraktion der Radionuklide aus den Abfalllösungen beeinflussen.

Es wurde die Abhängigkeit der Cäsiumextraktion mit Hilfe organischer Lösungen DTBDB18C6 im Fluorheptanol n₃ und DB21C7 im Fluorheptanol n₃ von der Salpetersäurekonzentration in der Ausgangslösung untersucht. Als Ausgangslösung verwendete man die Lösung 1, deren Zusammensetzung in Tabelle 2 beschrieben ist. Die Ergebnisse der Untersuchungen sind in Tabelle 7 dargestellt.

**Tabelle 7**

| Einfluss der Salpetersäurekonzentration auf Selektivität der erfindungsgemäßen Extraktionsmittel | | | |
|---|---|---|---|
| Versuch-Nr. | Salpetersäurekonzentration in mol/l | Verteilungsfaktor des Cäsiums | |
| | | DTBDB18C6 + Fluorheptanol n₃ | DB21C7 + Fluorheptanol n₃ |
| 1 | 0 | 2,5 | 0,25 |
| 2 | 0,1 | 7,1 | 1,0 |
| 3 | 0,5 | 12,8 | 3,2 |
| 4 | 1,0 | 12,3 | 7,8 |
| 5 | 2,0 | 10,3 | 10,2 |
| 6 | 3,0 | 8,2 | 12,2 |
| 7 | 4,0 | 6,0 | 11,4 |
| 8 | 5,0 | 4,0 | 10,0 |
| 9 | 6,0 | 2,7 | 8,0 |
| 10 | 7,0 | 1,1 | 6,2 |
| 11 | 8,0 | 0 | 5,0 |

Aus den Ergebnissen in Tabelle 7 geht hervor, dass das erfindungsgemäße Extraktionsmittel, enthaltend DTBDB18C6 in Fluorheptanol n₃, in dem neutralen, geringsaueren und mittelsaueren pH-Bereich Verteilungsfaktoren des Cäsiums hat, die für einen dynamischen Gegenstromprozess der Cäsiumextraktion ausreichend sind, und maximale Extraktionseigenschaften der Salpetersäurekonzentration im Bereich von 0,3 bis 1,5 mol/l liegen, weshalb Cäsium aus den neutralen Medien, zu denen mehrzählige Kreislauf-, Sumpf-, Abwasser und weiteres Wasser gehören, extrahiert werden kann.

Das Extraktionsmittel, das erfindungsgemäß DB21C7 in Fluorheptanol n₃ enthält, besitzt in den Lösungen mit der Salpetersäurekonzentration von 0 bis 0,7mol/l niedrige Extraktionseigenschaften aber weist die beste Selektivität zur Cäsiumextraktion für die Salpetersäurekonzentrationen im Bereich von 2,0 bis zu 5,0 mol/l mit Maximumselektivität bei 3,0 mol/l auf.

### 2. Selektivität der erfindungsgemäßen Extraktionsmittel im Vergleich zu bekannten Extraktionsmitteln auf Basis Crown XVI und Crown XVII.

Es wurde Extraktion der Kationen verschiedener Metalle aus salpetersaueren Wasserlösungen, die diese Kationen enthalten, durch Behandlung mit den Extraktionsmitteln, die erfindungsgemäß DCH18C6 oder DB21C7 im organischen Lösungsmittel mit 80 Vol.-% Fluorheptanol n₃ und 20 Vol.-% Syntanol in Konzentration der Kronenether 0,05mol/l und den Salpetersäuregehalt 190g/l aufweisen, untersucht. Zum Vergleich waren Angaben über ähnliche Versuche der Extraktionsmittel, die Crown XVI oder Crown XVII mit Sulfonsäure-Dinonylnaphtalen als Kationenaustauscher in der Tributylphosphat und Petroleum enthaltenden Matrixlösung enthalten, aus der Beschreibung zum Patent (US, 4749518,) verwendet.

Die Lösungen kontaktierten mit den erfindungsgemäßen Extraktionsmitteln in den bei 25 ± 3°C thermostatisierten Trenntrichtern im Laufe von 5 Minuten mit Verhältnis organischer Phase zu Wasserphase 1:1. Nach dem Abklären im Laufe von 60 Minuten werden die Phasen abgetrennt und die Wasserphase wurde auf Elementenkonzentrationen analysiert. Die nach Analyseergebnissen berechneten Verteilungsfaktoren sind in Tabelle 8 dargestellt.

**Tabelle 8**

| Extraktion der Kationen verschiedener Metalle | | | | | |
|---|---|---|---|---|---|
| Zusammenset zung | Ausgangskonzentr ation in g/l | Verteilungsfaktoren | | | |
| | | Extraktionsmittel auf Basis DCH 18C6 | * Extraktionsmittel auf Basis Crown XVI | Extraktions mittel auf Basis DB21C7 | * Extraktionsmittel auf Basis Crown XVII |
| Al | 6,0 | 0,03 | - | 0,02 | - |
| Ba | 1,0 | 2,03 | 4,2 | 1 ;02 | 0,03 |
| Fe | 10,0 | 0,017 | - | 0,014 | - |
| Y | 1,0 | - | 0,02 | - | 0,02 |
| Ca | 2,0 | 0,12 | - | 0,02 | - |
| Mn | 0,4 | 0,06 | - | 0,04 | - |
| Ni | 4,0 | 0,023 | - | 0,03 | - |
| Pd | 0,3 | - | 0,05 | 0,03 | 0,22 |
| Ru | 0,75 | 0,16 | 0,26 | 0,004 | 0,31 |
| ΣP3∋ | 25,0 | 0,04 | 0,06 | 0,04 | 0,17 |
| Rb | 0,12 | - | 0,11 | 0,02 | 0,29 |
| Pb | 0,05 | 4,2 | | 0,02 | - |
| Sr | 1,0 | 3,6 | 3,84 | 0,02 | 0,06 |
| Cr | 1,0 | 0,02 | | 0,02 | - |
| Cs | 1,0 | 0,02 | 0,03 | 1,8 | 1,59 |
| Zr | 1,0 | 0,018 | 1,41 | 0,038 | 2,09 |
| Na | 10,0 | 0,01 | - | 0,047 | - |

| | | | | | |
|---|---|---|---|---|---|
| * nach Patent (US, 4749518, A) | | | | | |

Aus Angaben in Tabelle 8 kann man die Schlussfolgerung machen, dass sich Extraktionseigenschaften des erfindungsgemäßen und des bekannten Verfahrens zum Extrahieren des Strontiums und Cäsiums unwesentlich unterscheiden.

### 3. Auswahl des Konzentrationsbereichs der Kronenether in den erfindungsgemäßen Extraktionsmitteln.

Es wurde Selektivität der erfindungsgemäßen Extraktionsmittel, die ein Gemisch aus DCH18C6 und DB21C7 in verschiedenen Konzentrationen darstellen, im organischen Lösungsmittel aus Fluorheptanol n₃ 87 Vol.-%, Syntanol 13 %, je nach Konzentration eines Kronenethers während Extraktion der Radionuklide Strontiums und Cäsiums untersucht.

Die Wasserlösungen des Strontiums und Cäsiums in Konzentration je 1 g/l und Salpetersäurekonzentration 3,0 mol/l mit der von vornherein beigebrachten Aliquote des Strontsiums-85 und Cäsiums-134 kontaktierten mit den genannten Extraktionsmitteln in den bei 25 ± 3°C thermostatisierten Trenntrichtern im Laufe von 5 Minuten mit Verhältnis der organischen und Wasserphase 1:1. Nach dem Abklären im Laufe von 60 Minuten wurden die Phasen abgetrennt und Wasserphase wurde analysiert. Die Konzentrationen des Strontiums und Cäsiums in den Wasserlösungen wurde radiometrisch bestimmt. Die erhaltenen Ergebnisse sind in Tabelle 9 vorgestellt.

**Tabelle 9**

| Einfluss der Kronenether-Konzentration auf Extraktionseigenschaften der erfindungsgemäßen Extraktionsmittel | | |
|---|---|---|
| Konzentration jeden Kronenethers DCH18C6 und DB21C7 im Extraktionsmittel in mol/l | Verteilungsfaktor | |
| | Strontium | Cäsium |
| 0,04 | 1,65 | 1,16 |
| 0,05 | 2,32 | 2,32 |
| 0,06 | 2,99 | 3,47 |
| 0,07 | 3,66 | 4,64 |
| 0,08 | 4,33 | 5,79 |
| 0,09 | 5,0 | 6,95 |
| 0,1 | 5,67 | 8,11 |

Aus den Ergebnissen in Tabelle 9 kann man die Schlussfolgerung machen, dass im gesamten Konzentrationsbereich der Kronenether die erfindungsgemäßen Extraktionsmittel Strontium und Cäsium genügend wirksam extrahieren und individuelle Kronenether-Konzentrationen in Bezug auf die Zusammensetzung der zu bearbeitenden Wasserlösung ausgewählt werden können.

### 4. Bestimmung einer optimalen Syntanol-Konzentration im erfindungsgemäßen Extraktionsmittel.

Es war Selektivität der erfindungsgemäßen Extraktionsmittel, die ein Gemisch aus DCH18C6 und DB21C7 in Konzentration je 0,05 mol/l enthalten, im Fluorheptanol n₃ und Syntanol enthaltenden organischen Lösungsmittel je nach ihrem quantitativen Verhältnis im Lösungsmittel untersucht.

Die salpetersauere Wasserlösung der mit oben beschriebener ähnlichen Zusammensetzung mit den im Voraus eingeführten Aliquoten des Strontiums-85 und Cäsiums-134 kontaktierte mit dem genannten Extraktionsmittel in den bei 25 ± 3°C thermostatisierten Trenntrichtern im Laufe von 5 Minuten mit Verhältnis der organischen und Wasserphase 1:1. Nach dem Abklären im Laufe von 60 Minuten wurden die Phasen abgetrennt und die Wasserphase analysiert. Die Konzentrationen des Strontiums und Cäsiums in den Wasserlösungen wurden radiometrisch bestimmt. Die erhaltenen Ergebnisse sind in Tabelle 10 vorgestellt.

**Tabelle 10**

| Extraktion der Radionuklide je nach Syntanol-Konzentration im erfindungsgemäßen Extraktionsmittel | | |
|---|---|---|
| Syntanol-Konzentration im Lösungsmittel in Vol.-% | Verteilungsfaktor | |
| | Strontium | Cäsium |
| 5 | 1,26 | 2,80 |
| 10 | 1,80 | 2,56 |
| 15 | 2,69 | 2,16 |
| 20 | 3,10 | 1,79 |

Aus Tabelle 10 ist ersichtlich, dass Erhöhung der Syntanol-Konzentration im organischen Lösungsmittel des erfindungsgemäßen Extraktionsmittels die Extraktion von Strontium positiv und Extraktion von Cäsium negativ beeinflusst. Aus der graphischen Gegenüberstellung der Extraktionsergebnisse kann man die Schlussfolgerung machen, dass für die erfindungsgemäßen Extraktionsmittel zur gemeinsamen Extraktion von Strontium und Cäsium eine optimale Syntanol-Konzentration im Fluorheptanol n₃ enthaltenden Lösungsmittel 13 Vol.-% gleich ist.

### 5. Strahlungsimmunität der erfindungsgemäßen Extraktionsmittel.

Es war Strahlungsimmunität der erfindungsgemäßen Extraktionsmittel, die zur Extraktion der Radionuklide Strontiums und Cäsiums verwendet werden, untersucht. Dazu wurden Reaktionsgemische, die zweiphasige organische Wasser-Systeme darstellen und Extraktionsmittel auf Basis DCH18C6 oder DB21C7 in Fluorheptanol n3, salpetersauere Wasserlösungen der Abfälle sowie, zum Vergleich, Reaktionsgemische mit Extraktionsmitteln auf Basis Crown XVI oder Crown XVII mit Sulfonsäure-Dinonylnaphtalen als Kationenaustauscher in Matrixlösung aus Tributylphosphat und Petroleum enthalten, mit Gammastrahlen Co⁶⁰ in der thermostatisierenden Zelle aus rostfreiem Stahl unter kontinuierlichem Rühren und Druckluftmischung bestrahlt. Maximale Integralstrahlendosis betrug 80 Wh/l (285,3 kGr). Muster der Extraktionsmittel wurden auf Extraktionseigenschaften vor und nach Bestrahlung zur Bestimmung der Verteilungsfaktorverringerung D_{Me} infolge radiolytischer Destruktion der Komponenten des Extraktionsmittels getestet. Die erhaltenen Ergebnisse sind in Tabelle 11 dargestellt.

**Tabelle 11**

| Strahlungsimmunität der erfindungsgemäßen Extraktionsmittel | | | | | | | |
|---|---|---|---|---|---|---|---|
| Nº | Kronenether des Extraktionsmittels | Extrahiertes Radionuklid | Verteilungsfaktor | | | | |
| | | | Vor Bestrahlung | Nach Bestrahlung mit Dosis | | | |
| | | | | 100,0 kGr (10⁷ Rad) | | 285,3 kGr | |
| | | | | D_{Me} | % vom Ausgangswert | D_{Me} | % vom Ausgangswert |
| 1 | DCH18C6 | Sr | 3,6 | 3,4 | 94,4 | 3,0 | 83,3 |
| 2 | Crown XVI | Sr | 1,98 | 1,56 | 78,78 | - | |
| 3 | DB21C7 | Cs | 2,83 | 2,83 | 100,0 | 2,65 | 93,8 |
| 4 | Crown XVII | Cs | 1,59 | 1,04 | 65,41 | - | |

Aus Ergebnissen in Tabelle 11 ist ersichtlich, dass das Extraktionsmittel auf Basis Crown XVI nach Bestrahlung mit Dosis 100,0 kGr ca. 21 % von der Größe des Strontium-Verteilungsfaktors verliert und das Extraktionsmittel auf Basis Crown XVII den Cäsium-Verteilungsfaktor auf 35 % verringert. Nach Bestrahlung mit Dosis 285,3 kGr funktionieren die Extraktionsmittel auf Basis Crown XVI und Crown XVII praktisch nicht. Verluste an Verteilungsfaktoren von Cäsium und Strontium in erfindungsgemäßen Extraktionsmitteln nach Bestrahlung mit Dosis 100,0 kGr sind unbedeutend und die Extraktionsmittel behalten ihre Eigenschaften auch nach Bestrahlung mit Dosis wesentlich höher als 100,0 kGr.

### 6. Regeneration der erfindungsgemäßen Extraktionsmittel.

Da Kronenether teuer sind, wurde Rückgewinnungsmöglichkeiten der Extraktionsmittel, die Kronenether enthalten, zur weiteren Verwendung untersucht.

Zur Gewinnung eines erfindungsgemäßen Extraktionsmittels wurden DB21C7 (0,06 mol/l) 23,64 g und DCH18C6 (0,08 mol/l) 29,8 g in 1 Liter des organischen Lösungsmittels, das erfindungsgemäß Syntanol 13 Vol.-% und Fluorheptanol n₃ 87 Vol.-% enthält, gelöst. Diese organische Phase des Extraktionsmittels ist im Laufe einer Stunde stehen geblieben und gekühlt worden. Die nächsten hintereinander folgenden Schritte sind:
- Inkontaktbringen der organischen Phase mit der wässrigen Ausgangslösung, deren Zusammensetzung in Tabelle 3 für die Lösung Nr.1 angegeben ist, und Abtrennung der Phasen nach Auftauen;
- Analyse der Wasserphase (des Raffinats), Inkontaktbringen der organischen Phase mit dem entionisierten Wasser (zwei Kontakte) und Abtrennung des wässrigen Reextraktes zur Analyse der darin enthaltenden, zu extrahierenden Elementen und der organischen Phase - des umlaufenden Extraktionsmittels;
- Inkontaktbringen des umlaufenden Extraktionsmittels mit der Wasserlösung von Kalium-Ethylendiamin-tetraacetat (im weiteren EDATA (K)) in Konzentration 0,025 mol/l (ein Kontakt) und pH von ca. 8,0 bis ca. 9,0, erreichbar durch Einbringen des Kaliumhydroxid in die Lösung.

Bedingungen des Inkontaktbringens, der Abtrennung und Untersuchung der Phasen sind mit dem im Punkt 4 beschriebenen Schritten ähnlich. Die anhand der Untersuchungsergebnisse berechneten Verteilungsfaktoren der Metallkationen sind in Tabelle 12 dargestellt.

**Tabelle 12**

| Regeneration des erfindungsgemäßen Extraktionsmittels bei der Ausführung des erfindungsgemäßen Verfahrens zur Extraktion der Radionuklide | | | | | |
|---|---|---|---|---|---|
| Kontakt-Nr. | Zusammensetzung der Wasserphase | Verteilungsfaktoren der Elemente | | | |
| | | Cäsium | Strontium | Barium | Blei |
| 1 | Ausgangslösung | 2,6 | 2,8 | 2,2 | 4,15 |
| 2 | Wasser | 0,8 | 0,7 | 0,6 | 4,22 |
| 3 | Wasser | 0,24 | 0,13 | 0,11 | 4,21 |
| 4 | EDATA (K) + Kaliumhydroxid zum Einstellen des pH-Wertes von ca. 8,0 bis ca. 9,0 | 0,05 | 0,01 | 0,01 | 0,11 |

Aus der Tabelle 12 ist ersichtlich, dass Extraktion, Ausspülung mit Wasser und Reextraktion des Cäsiums, Strontiums und Bariums mit einem befriedigenden Verteilungsfaktor geschieht. Inkontaktbringen des umlaufenden Extraktionsmittels mit EDATA (K) ermöglicht, den Komplexbildner des erfindungsgemäßen Extraktionsmittels für eine weitere Verwendung vollständig wiederherzustellen, was eine wichtige Eigenschaft zum Schaffen einer für organische Phase zyklischen, dynamischen Betriebsart des technologischen Prozesses zur Extraktion der Radionuklide mittels des erfindungsgemäßen Verfahrens ist. Da Blei durch das Wasser nicht reextrahiert wird, wird zu seiner Entfernung aus dem umlaufenden Extraktionsmittel eine Regenerationskaskade benötigt, in der als Wasserphase das Kalisalz der Ethylen-diamintetraessigsäure verwendet werden kann.

Aus der oben dargelegten Ausführung folgt, dass erfindungsgemäße Extraktionsmittel, die Kronenether enthalten, die zur Extraktion der Radionuklide fähig sind sowie aus der Gruppe von Kronenethern ausgewählt werden, die aromatische Fragmente mit Alkyl- und/oder Hydroalkylsubstituenten linearen und/oder verzweigten Baus und/oder Cyclohexan-Fragmente mit Alkyl- und/oder Hydroxyalkylsubstituenten linearen und/oder verzweigten Baus, und/oder Fragmente -O-CHR-CH₂O- mir R = normales oder verzweigtes Alkyl oder Hydroxyalkyl in Fluorpolymer, Alkohol-Telomer 1,1,7-trihydododecafluorheptanol-1, oder im organischen Lösungsmittel, das Fluorpolymer, Alkohol-Telomer 1,1,7-trihydododecafluorheptanol-1, und das Gemisch aus Polyoxyethylenglycolethere synthetischer primärer höchster Fettalkohole der Fraktion C₁₂ - C₁₄ enthalten, über die folgenden Eigenschaften verfügen:
- hohe Extraktionseigenschaften in Bezug auf Radionuklide, zum Beispiel Strontium oder Cäsium, die wenig vom Säuregehalt und der Elementenzusammensetzung der Makroverunreinigungen in der Ausgangslösung abhängen;
- Immunität zur Bestrahlung;
- das in den Extraktionsmitteln verwendete Verdünnungsmittel ermöglicht, die für eine wirksame Extraktion Strontiums und Cäsiums notwendigen Konzentrationen der Kronenether zu erhalten, wobei das Verdünnungsmittel sowohl Kronenether selbst als auch ihre Assoziate mit zu entziehenden Kationen während Kontakte mit Wasserlösungen und Salpetersäurelösungen festhalten kann, die für Reextraktion der Radionuklide verwendet sein können;
- Möglichkeit der Regeneration des gebrauchten erfindungsgemäßen Extraktionsmittels für nachfolgende Weiterverwendung, was einen mehrfachen Einsatz der erfindungsgemäßen Extraktionsmittel in den industriellen Bedingungen in dynamischer Betriebsart zulässt.

Aus der oben dargelegten Ausführung folgt, dass es, wie in den oben genannten Ausführungsbeispielen des Extraktionsverfahrens der Radionuklide Strontiums und/oder Cäsiums aus saueren Wasserlösungen hochaktiver Abfälle mit Einsatz der erfindungsgemäßen Extraktionsmittel anschaulich dargestellt, möglich ist, eine optimale Auswahl quantitativer und qualitativer Zusammensetzung der Komplexbildner und des Lösungsmittels für das erfindungsgemäße Extraktionsmittel zur Lösung konkreter Aufgaben bei Extraktion Radionuklide aus Medien, die unterschiedlichen Gehalt an Makroverunreinigungen, zuzüglich Natrium, unterschiedlichen Säuregehalt und unterschiedlichen Bestand der radioaktiven Elemente haben, durchzuführen.

### 7. Erfindungsgemäße Extraktion der Radionuklide aus den saueren Wasserlösungen der radiochemischen Produktion mit Hilfe der erfindungsgemäßen Extraktionsmittel in den industriellen Bedingungen.

Dem Fachmann, der auf dem Gebiet der Überarbeitung hochaktiver Abfälle der radiochemischen Produktion arbeitet, ist bekannt, dass in den beherrschten Technologien zum Fraktionieren der Abfälle durch Bearbeitung mit den Extraktionsmitteln, die chloriertes Cobalt-Dicarbolit enthalten, sind die Möglichkeiten der Extraktion Cäsiums aus den Lösungen, die große Konzentrationen der Elemente I.-III. Gruppen enthalten, beschränkt. Infolge niedriger Selektivität von Co-Dicarbolit werden Ausgangslösungen beinahe um das Doppelte verdünnt, indem die Menge sekundärer radioaktiver Abfälle erhöht wird. Die Extraktionsmittel auf Basis chloriertes Co-Dicarbolits weisen maximale Verteilungsfaktoren für Salpetersäurekonzentrationen von 2,0 bis 4,0 mol/l auf. Als Lösung zur Cäsium-Reextraktion für das Extraktionsmittel mit chloriertem Co-Dicarbolit ist Hydrasin-Lösung in der Salpetersäure mit Konzentration von 3,0 bis 8,0 mol/l. Laut Forderungen an Brand- und Explosionsschutz der Verdampfungs- und Verglasungsprozesse soll der Hydrasin-Gehalt in den zu verarbeitenden Lösungen höchstens 1,0 g/l ausmachen, was Verdünnung der erhaltenen Reextrakte vor Verglasung bedürft.

Für den Einsatz von chloriertem Co-Dicarbolit werden mehrere Beispiele für technologische Schemas angeboten: gemeinsame Extraktion Strontiums und Cäsiums mit nachfolgender getrennter Reextraktion mittels Hydrasin-Lösung in der Salpetersäure oder ein komplexes Schema für Extraktion aller Radionuklide in einem Extraktionszyklus. Im Extraktionsmittel befindet sich dabei nur ein Komplexbildner u. a. chloriertes Co-Dicarbolit, das Cäsium mit ziemlich hohen Verteilungsfaktoren extrahiert aber keine hohe Selektivität hat, da es auch andere Elemente extrahiert. Allein Extraktion Strontiums mit Hilfe chloriertes Co-Dicarbolit ist unmöglich.

Industrielle Verwendung der Technologien zur Extraktion der Radionuklide, zuzüglich Strontium und Cäsium, mit Hilfe der Extraktionsmittel, die Kronenether enthalten, wurde durch hohe Lösbarkeit dieser Ethere und ihrer Komplexe mit zu entziehenden Kationen in Wasserlösungen zurückgehalten. Viele Untersuchungen mit Einsatz der Kronenether von chlorierten Kohlenwasserstoffen als Verdünnungsmittel, z. B. Tributylphosphat in Paraffin und andere, ermöglichten nicht, eine industrielle Technologie zur Extraktion der Radionuklide mit Einsatz von Kronenethern zu schaffen.

Dabei beinhaltet jedes technologische Schema der Extraktionsverfahren von Radionukliden folgende Schritte: Inkontaktbringen des Extraktionsmittels mit den zu bearbeitenden Lösungen, Abtrennung des Extraktionsmittels, das eine organische Phase, die mit den zu entziehenden Kationen angereichert ist, und eine Wasserphase enthält, Auswaschen organischer Phase von den Verunreinigungen und nachfolgende gemeinsame oder getrennte Reextraktion der Radionuklide mit Hilfe des Wassers oder Lösungen verschiedener Komplexone.

Erfindungsgemäß kann Regeneration des gebrauchten Extraktionsmittels zusätzlich durchgeführt sein.

Die Erfinder entwickelten Extraktionsverfahren der Radionuklide mit der Anwendung der erfindungsgemäßen Extraktionsmittel, die zulassen, diese Verfahren in industriellen Bedingungen in dynamischer Betriebsart zu verwirklichen.

### 7.1. Erfindungsgemäßes Extraktionsverfahren Strontiums in dynamischer Betriebsart.

Die wässrige Ausgangslösung, deren Zusammensetzung und Konzentration der Komponenten in Tabelle 3 für die Lösung Nº1 dargestellt sind, wurden mit erfindungsgemäßem Extraktionsmittel, das 0,05 mol/l DCH18C6 im Lösungsmittel aus 20 Vol.-% Syntanol und 80 Vol.-% Fluorheptanol n₃ enthält, in Gegenstrombetriebsart in der Anlage Mischer-Kläranlage mittels Pulsmischung und Phasentransport in Kontakt gebracht. Extraktionsschema beinhaltet acht Extraktionsstufen, zwei Waschstufen, acht Reextraktionsstufen und zwei Regenerationsstufen des umlaufenden Extraktionsmittels. Zusammensetzung und Komponentendurchfluss des Extraktionsschemas sind in der Tabelle 13 dargestellt.

**Tabelle 13**

| Zusammensetzung und Komponentendurchfluss | | |
|---|---|---|
| Komponente des Extraktionsschemas | Durchfluss in ml/h | Zusammensetzung |
| Ausgangslösung | 57,3 | Siehe Tabelle 3, Lösung Nº 1, |
| Extraktionsmittel | 59,0 | 0,05 mol/l DCH18C6 + Lösungsmittel Syntanol 20 Vol.-% und Fluorheptanol n₃ 80 Vol.-% |
| Waschlösung | 5,66 | Entionisiertes Wasser |
| Reextraktionslösung | 33,3 | Entionisiertes Wasser |
| Regenorationslösung | 5,66 | 0,025 mol/l Wasserlösung von Kalium-Ethylen-diamintetraacetat + Kaliumhydroxid zur Einstellung des pH-Wertes von ca. 8,0 bis ca. 9,0 |

Im Laufe des Anlagebetriebs wurden Konzentrationen Strontiums in Raffinaten, Reextrakten und Regeneraten sowie Konzentration der Kronenether in den Produkten des Extraktionsschemas radiometrisch überwacht. Technologische Parameter des Prozesses und Lösbarkeit des Kronenethers (durchschnittliche Parameter einer Versuchsreihe) sind in Tabelle 14 abgebildet.

**Tabelle 14**

| Strontiumextraktion mittels des erfindungsgemäßen Verfahrens | | |
|---|---|---|
| Das Produkt des Extraktionsschemas | Strontiumgehalt in Produkten des Extraktionsschemas in Vol.-% vom Ausgangsgehalt* | Konzentration des Kronenethers in Produkten des Extraktionsschemas in mg/l |
| Raffinat | 0,35 | 80 |
| Reextrakt | 99,55 | 172 |
| Regenerat | <0,1 | 30 |

| | | |
|---|---|---|
| * mit Berücksichtigung des Durchflusses | | |

Aus der Tabelle 14 ist ersichtlich, dass Extraktion Strontiums über 99 % beträgt. Durchschnittliches Konzentrieren ist ca. 1,7. Der restliche Elementengehalt wird mit Regenerierungslösung vollständig herausgezogen, was ermöglicht, das umlaufende Extraktionsmittel in den Zyklus zurückzuführen und einen kontinuierlichen Prozess zu erhalten. Unbedeutsame Verluste an organischer Phase mit den Wasserprodukten des technologischen Schemas ermöglicht, andauernde ununterbrochene Prozesse ohne Korrektur der Zusammensetzung der organischen Phase des erfindungsgemäßen Extraktionsmittels durchzuführen.

### 7.2. Erfindungsgemäßes Extraktionsverfahren Cäsiums in dynamischer Betriebsart.

Ablauf des Prozesses und Bedingungen der Extraktion von Cäsium sind mit dem o. g. Punkt 7.1 ähnlich, als organische Phase aber werden zur Extraktion von Cäsium erfindungsgemäße Extraktionsmittel eingesetzt, die Lösungen von DB21C7 in Konzentration 0,05 mol/l im organischen Lösungsmittel aus Syntanol 5 Vol.-% und Fluorheptanol n₃ 95 Vol.-% enthalten. Zusammensetzung und Komponentendurchfluss des Extraktionsschemas sind in Tabelle 15 vorgestellt.

**Tabelle 15**

| Zusammensetzung und Komponentendurchfluss | | |
|---|---|---|
| Komponente des Extraktionsschemas | Durchfluss in ml/Stunde | Zusammensetzung |
| Ausgangslösung | 57,3 | Siehe das Beispiel 7.1. |
| Extraktionsmittel | 59,0 | 0,05 mol/l DB21C7 + Lösungsmittel Syntanol 5 Vol.-% und Fluorheptanol n₃ 95 Vol.-% |
| Waschlösung | 5,66 | Entionisiertes Wasser |
| Reextraktionslösung | 33,3 | Entionisiertes Wasser |
| Regenerationslösung | 11,32 | 0,025 mol/l Wasserlösung von Kalium-Ethylen-diamin-tetraacetat + Kaliumhydroxid zur Einstellung des pH-Wertes von ca. 8,0 bis ca. 9,0 |

Während des Betriebs der Anlage werden Konzentration Cäsiums in Raffinaten, Reextrakten und Regeneraten sowie Konzentration der Kronenether in den Produkten des Extraktionsschemas radiometrisch überwacht. Technologische Parameter des Prozesses und Lösbarkeit der Kronenether (durchschnittliche Parameter einer Versuchsreihe) sind in Tabelle 16 dargestellt.

**Tabelle 16**

| Extraktion Cäsiums mittels erfindungsgemäßen Verfahrens | | |
|---|---|---|
| Produkt des Extraktionsschemas | Gehalt des Cäsiums in Produkten des Extraktionsschemas in % vom Ausgangsgehalt * | Konzentration des Kronenethers in Produkten des Extraktionsschemas in mg/l |
| Raffinat | 1,35 | 27 |
| Reextrakt | 94,5 | 53 |
| Regenerat | 4,15 | 18 |

| | | |
|---|---|---|
| * mit Berücksichtigung des Durchflusses | | |

Aus der Tabelle 16 ist ersichtlich, dass Extraktion des Cäsiums über 98 % mit Cäsiumausbeute ins salzlose Produkt 95 % beträgt. Das vom Cäsium befreite, regenerierte Extraktionsmittel kann mit Minimumverlusten dem technologischen Zyklus zurückgeführt werden.

### 7.3. Erfindungsgemäßes Verfahren zur gemeinsamen Extraktion Strontiums und Cäsiums aus den Abfällen russischer radiochemischer Produktion in der dynamischen Betriebsart.

Als Ausgangslösung verwendete man die Lösung radioaktiver Abfälle, deren Zusammensetzung in Tabelle 3 unter Lösung 1 abgebildet ist.

Ablauf des Prozesses und Bedingungen der Extraktion sind mit dem o. g. Punkt 7.1 ähnlich, als Extraktionsmittel aber wird das Gemisch aus 0,06 mol/l DB21C7 und 0,08 mol/l DCH18C6 im Lösungsmittel, das Syntanol 13 Vol.-% und Fluorheptanol n₃ 87 Vol.-% enthält, eingesetzt. Zusammensetzung und Komponentendurchfluss des Extraktionsschemas sind in der Tabelle 17 dargestellt.

**Tabelle 17**

| Zusammensetzung und Komponentendurchfluss | | |
|---|---|---|
| Produkt | Durchfluss in ml/Stunde | Zusammensetzung |
| Ausgangslösung | 57,3 | Siehe die Lösung aus Beispiel 7.1 |
| Extraktionsmittel | 59,0 | 0,06 mol/l DB21C7 + 0,08 mol/l DCH18C6 + Lösungsmittel aus |
| | | Syntanol 13 Vol.-% und Fluorheptanol n₃ 87 Vol.-% |
| Waschlösung | 5,66 | Entionisiertes Wasser |
| Reextraktionslösung | 33,3 | Entionisiertes Wasser |
| Regenerierungslösung | 5,66 | 0,025 mol/l Wasserlösung des Kalium-Ethylen-Diamin-tetraacetat + Kaliumhydroxid zur Einstellung des pH-Wertes von ca. 8,0 bis ca. 9,0 |

Im Laufe des Betriebs der Anlage wurden Konzentrationen Strontiums und Cäsiums in Raffinaten, Reextrakten und Regeneraten sowie Konzentrationen der Kronenether in den Produkten des Extraktionsschemas überwacht. Technologische Prozessesparameter und Lösbarkeit der Kronenether (durchschnittliche Parameter einer Versuchsreihe) sind in der Tabelle 18 dargestellt.

**Tabelle 18**

| Erfindungsgemäßes Verfahren zur Extraktion Strontiums und Cäsiums aus den Abfällen russischer radiochemischer Produktion | | | |
|---|---|---|---|
| Produkt des Extraktionsschemas | Gehalt in Produkten des Extraktionsschemas in % vom Ausgangsgehalt* | | Konzentration des Kronenethers in Produkten des Extraktionsschemas in mg/l |
| | Cäsium | Strontium | |
| Raffinat | 1,63 | 1,87 | 180 |
| Reextrakt | 95,1 | 97,4 | 152 |
| Regenerat | 3,2 | 0,7 | 70 |

| | | | |
|---|---|---|---|
| * mit Berücksichtigung des Durchflusses | | | |

Aus den Ergebnissen in Tabelle 18 ist ersichtlich, dass gemeinsame Extraktion Strontiums und Cäsiums über 98 % beträgt. Durchschnittliches Konzentrieren ist ca. 1,7 und Ausbeute des Endproduktes 95 - 97 %. Restgehalt der zu extrahierenden Elemente wird mittels Regenerierungslösung vollständig herausgezogen, was ermöglicht, das umlaufende Extraktionsmittel dem Zyklus zurückzuführen und einen kontinuierlichen Prozess zu erhalten. Untersuchungen der Zusammensetzung des Extraktionsgemisches nach 50 Umlaufzyklen des Extraktionsmittels zeigt, dass unbedeutende Verluste an organischer Phase mit den Wasserprodukten des technologischen Schemas ermöglichen, andauernde ununterbrochene Prozesse ohne Korrektur der Zusammensetzung der organischen Phase des erfindungsgemäßen Extraktionsmittels durchzuführen.

### 7.4. Erfindungsgemäßes Verfahren zur gemeinsamen Extraktion Strontiums und Cäsiums aus den Abfällen INEEL (USA) in der dynamischen Betriebsart.

Die wässrige Ausgangslösung, Imitator der Abfälle INEEL (Idaho, USA), dessen Zusammensetzung in Tabelle 19 dargestellt ist, wird in Kontakt mit dem erfindungsgemäßen Extraktionsmittel, das ein Gemisch von DB21C7 in Konzentration 0,1 mol/l und DCH18C6 in Konzentration 0,1 mol/l im Fluorheptanol n₃ enthaltenden Lösungsmittel darstellt, im kontinuierlichen Gegenstrombetrieb in der Anlage Mischer-Kläranlage durch Pulsmischung und Phasentransport gebracht.

**Tabelle 19**

| Zusammensetzung der Ausgangslösung | | | | | |
|---|---|---|---|---|---|
| Element | Konzentration | | Element | Konzentration | |
| | mol/l | g/l | | mol/l | g/l |
| Al | 0.75 | 20,25 | K | 0.19 | 7.43 |
| B | 0.03 | 0.32 | Na | 1.44 | 33.12 |
| Cd | 0.0038 | 0.43 | Zr | 0.01 | 0.9 |
| Ca | 0.065 | 2.6 | Sr | 1.7×10⁻⁴ | 4.8×10⁻³ |
| Cr | 0.005 | 0.26 | Cs | 7.5×10⁻⁵ | 9.97×10⁻³ |
| Fe | 0.021 | 1.17 | Ni | 1.7×10⁻³ | 0.1 |
| Hg | 0.004 | 0.8 | Mn | 1.4×10⁻³ | 0.1 |
| Pb | 1.45×10⁻³ | 0.17 | HNO3 | 1.63 | 103 |

Das Extraktionsschema beinhaltet acht Extraktionsstufen, zwei Waschstufen, zehn Reextraktionsstufen und vier Regenerationsstufen des umlaufenden Extraktionsmittels. Zusammensetzung und Durchfluss der Produkte sind in der Tabelle 20 dargestellt.

**Tabelle 20**

| Zusammensetzung und Komponentendurchfluss | | |
|---|---|---|
| Komponente des Extraktionsschemas | Durchfluss in ml/Stunde | Zusammensetzung |
| Ausgangslösung | 57,3 | Siehe die Tabelle 19. |
| Extraktionsmittel | 59,0 | DB21C7 in Konzentration 0,1 mol/l + DCH18C6 in Konzentration 0,1 mol/l im Lösungsmittel Fluorheptanol n₃ 100 Vol.-% |
| Waschlösung | 5,66 | Entionisiertes Wasser |
| Reextraktionslösung | 33,3 | entionisiertes Wasser |
| Regenerationslösung | 33,3 | 0,025 mol/l Wasserlösung des Kalium-Ethylen-Diamin-tetraacetat + Kaliumhydroxid zur Einstellung des pH-Wertes auf - 8 |

Im Laufe des Betriebs der Anlage wurden Konzentrationen Strontiums und Cäsiums in Raffinaten, Reextrakten und Regeneraten sowie Konzentrationen der Kronenether in den Produkten des Extraktionsschemas überwacht. Technologische Prozessesparameter und Lösbarkeit der Kronenether (durchschnittliche Parameter einer Versuchsreihe) sind in der Tabelle 21 dargestellt.

**Tabelle 21**

| Extraktion Strontiums und Cäsiums aus den Abfällen (INEEL, USA) | | | |
|---|---|---|---|
| Produkt des Extraktionsschemas | Gehalt in den Produkten des Extraktionsschemas in % vom Ausgangsgehalt * | | Konzentration des Kronenethers in Produkten des Extraktionsschemas in mg/l |
| | Cäsium | Strontium | |
| Raffinat | 1,93 | 1,88 | 36 |
| Reextrakt | 94,87 | 94,42 | 19 |
| Regenerat | 3,2 | 3,7 | 11 |

| | | | |
|---|---|---|---|
| * mit Berücksichtigung des Durchflusses der Produkte | | | |

Aus der Tabelle 21 ist ersichtlich, dass eine gemeinsame Extraktion Strontiums und Cäsiums über 98 % beträgt. Durchschnittliches Konzentrieren ist ca. 1,2 und Ausbeute ist ca. 95 %. Verluste des Extraktionsmittels mit den Wasserlösungen in diesem Prozess sind minimal.

Nach Prüfergebnissen des erfindungsgemäßen Verfahrens wurde festgestellt:
- Anwendung des erfindungsgemäßen Extraktionsmittels, das ein Gemisch von Kronenethern DB21C7 und DCH18C6 enthält, lässt über 98 % Strontiums und Cäsiums in einem Extraktionszyklus zu extrahieren;
- Konzentrieren des Strontiums wird mehr als 1,8-fach erreicht und die gewonnenen salzlose wässrige Reextrakte enthalten unter 0,1 mol/l Salpetersäure;
- Verluste des Extraktionsmittels liegen unter 1,0 ml pro I der zu verarbeitenden Lösung;
   Somit wurden Extraktionsmittel auf Basis von Kronenethern, die über eine hohe Selektivität für radioaktive Nuklide verfügen, sowie Extraktionsverfahren der Radionuklide aus den saueren Wasserlösungen hochaktiver Abfälle, die in radiochemischer Produktion anfallen und Makroverunreinigungen incl. Natriums in bedeutenden Mengen enthalten, entwickelt.
   Zu Vorteilen der erfindungsgemäßen Extraktionsverfahren der Radionuklide ist ebenso folgendes zu zählen:
- Verarbeitungsmöglichkeit von flüssigen radioaktiven Abfällen einer beliebigen Zusammensetzung ohne ihre vorhergehenden Korrektur;
- Reextraktionsmöglichkeit radioaktiver Nuklide mittels Wasserlösungen und als Folge die Möglichkeit, Reextrakte zur Verglasung dem Ofen unmittelbar zuzuführen, um spezifische Aktivität des Glases zu erhöhen;
- Mehrzweckverfahren gemäß der Erfindung, die Möglichkeit haben, sowohl Reextrakt von Cäsium und Strontium gemeinsam als auch einzelne Reextrakte in einem technologischen Schema und in getrennten technologischen Schemas mit dem Einsatz einzelner Extraktionsmittel zu gewinnen.

Experimentelle Bestimmungen der thermischen Stabilitäten der Extraktionsmittel im Gemisch mit der Salpetersäure verschiedener Konzentration zeigten, dass Extraktion, Reextraktion sowie nachfolgendes Eindampfen von Wasserprodukten des Extraktionsschemas nicht explosions- und feuergefährlich sind.

Die Möglichkeit erfindungsgemäßer Anwendung von Fluorheptanol n3 als Verdünnungsmittel makrozyklischer Verbindungen, zum Beispiel Kronenehtere, das die Fähigkeit besitzt, Kronenehtere und ihre Assoziate mit den zu entziehenden Ionen festzuhalten, ermöglichte verschiedene Extraktionsmittel, zum Beispiel zur Extraktion radioaktiver Nuklide, und Extraktionsverfahren, die sicher und technologisch günstig sind, zu entwickeln.

Als wirtschaftliche Einsatzvorteile der erfindungsgemäßen Extraktionsmittel auf Basis der Kronenether können Kostensenkung für Kronenehtere dank Regenerationsmöglichkeit des Extraktionsmittels, Einsparung an Hydrasin und Salpetersäure sowie Einsparung des Extraktionsmittels selbst dank wenigeren Verlusten an Komponenten des Extraktionsmittels bei Wasserkontakten genannt werden.

### Die industrielle Anwendbarkeit

Die Extraktionsmittel gemäß der Erfindung können mit Hilfe der bekannten Technologien gewonnen werden. Regenerationsverfahren der Extraktionsmittel für weitere Wiederverwendung und erfindungsgemäße Extraktionverfahren der Radionuklide mit der Anwendung der erfindungsgemäßen Extraktionsmittel können in verschiedenen industriellen Betrieben mit Auswahl der Zusammensetzung und des quantitativen Verhältnisses der Komponenten im Extraktionsschema sowie der Betriebsarten der Verarbeitung in Übereinstimmung mit der Zusammensetzung der zu verarbeitenden Lösungen ausgeführt werden.

Kompaktes technologisches Schema der erfindungsgemäßen Verfahren ermöglicht, Technologie zum Entzug der Radionuklide, insbesondere Strontiums und Cäsiums, sowohl in Kammer- als auch in Canyonanordnung der Anlagen zu verwenden.

## Patentansprüche

1. Extraktionsmittel zur Extraktion von Radionukliden aus sauren Wasserlösungen von hochaktiven Abfällen aus der radiochemischen Produktion, die auch andere Makrobeimischungen einschließlich Natrium enthalten,
**dadurch gekennzeichnet,**
**dass** das Extraktionsmittel eine makrozyklische Verbindung enthält, die die Ionen der Radionuklide aufnehmen kann, und aus der Gruppe von folgenden Kronenethern ausgewählt wird:
- Kronenether mit nicht substituierten aromatischen Fragmenten,
- Kronenether mit substituierten aromatischen Fragmenten, die Alkyl- und/oder Hydroxyalkylsubstituenten linearen und/oder verzweigten Bau aufweisen,
- Kronenether mit nicht substituierten Zyklohexanfragmenten,
- Kronenether mit substituierten Zyklohexanfragmenten, die Alkyl- und/oder Hydroxyarkylsubstituenten linearen und/oder verzweigten Bau aufweisen,-Kronenether mit substituierten Fragmenten -O-CHR-CH₂O- mit R = normales oder verzweigtes Alkyl bzw. Hydroxyalkyl und
**dass** das Extraktionsmittel in einem organischen Lösungsmittel verwendet wird, das das polyfluorierte Alkohol-Telomer 1,1,7-Trihydrododecafluorheptanol-1 enthält.

2. Extraktionsmittel nach Anspruch 1,
**dadurch gekennzeichnet,**
**dass** das organische Lösungsmittel eine Mischung aus Polyoxyethylenglukolethern von synthetischen, primären, höheren Fettalkoholen der Fraktion C₁₂-C₁₄ mit der allgemeinen Formel CₙH₂ₙ₊₁O (C₂H₄O)ₘH mit n = 12-14, m = 2 zusätzlich enthält.

3. Extraktionsmittel nach Anspruch 2,
**dadurch gekennzeichnet,**
**dass** das organische Lösungsmittel das folgende Verhältnis der Komponenten in Vol.-% aufweist:
polyfluoriertes Alkohol-Telomer
1,1,7-Trihydrododecafluorheptanol 80 - 99,
ein Gemisch aus Polyoxyethylenglykolethern
der synthetischen, primären, höheren Fettalkohole
der Fraktion C₁₂ - C₁₄ 20 - 1.

4. Extraktionsmittel nach einem der Ansprüche 1 bis 3,
**dadurch gekennzeichnet,**
**dass** es der Extraktion radioaktiver Cäsiumnuklide aus Cs-Kationen enthaltenden Abfällen angepasst wird und Kronenether enthält, die aus der folgenden Gruppe ausgewählt sind: Di-tert-butyldibenzo-18-crown-6 (DTBDB18C6), Di-isooktyldibenzo-18-crown-6 (DIODS18C6), Dibenzo-21-crown-7 (DB21C7), Bis-4,4'(5')[1-hydroxy-2-ethylhexyl]benzo-18-crown-6 (Crown XVII).

5. Extraktionsmittel nach einem der Ansprüche 1 bis 3,
**dadurch gekennzeichnet,**
**dass** es der Extraktion von Cs-Radionukliden aus Cs-Kationen enthaltenden Abfällen angepasst wird und Dibenzo-21-crown-7 in einer Konzentration von etwa 0,04 mol/l bis etwa 0,095 molll des Extraktionsmittels enthält.

6. Extraktionsmittel nach einem der Ansprüche 1 bis 3,
**dadurch gekennzeichnet,**
**dass** es der Extraktion radioaktiver Strontiumnuklide aus Sr-Kationen enthaltenden Abfällen angepasst wird und Kronenether aus der Gruppe Di-tert-butyldizyklohexano-18-crown-6 (DTBDCH18C6), Di-isooktyldizyklohexano-18-crown-6 (DIODCH18C6), Dizyklohexano-18-crown-6 (DCH18C6), Bis-4,4'(5')[1-hydroxyheptyl]Zyklohexo-18-crown-6 (Crown XVI)ausgewählt wird.

7. Extraktionsmittel nach einem der Ansprüche 1 bis 3,
**dadurch gekennzeichnet,**
**dass** es der Extraktion der Sr-Radionuklide aus Sr-Kationen enthaltenden Abfällen angepasst wird und Dizykiohexano-18-crown-6 In einer Konzentration von etwa 0,04 mol/l bis etwa 0,95 mol/l enthält.

8. Extraktionsmittel nach einem der Ansprüche 1 bis 3,
**dadurch gekennzeichnet,**
**dass** es der gemeinsamen Extraktion radioaktiver Nuklide des Strontiums und Cäsiums aus Strontium- und Cäsiumkationen enthaltenden Abfällen angepasst wird und ein Gemisch von Kronenethem enthält, in dem wenigstens ein Kronenether aus der Gruppe gewählt wird, die Di-tert-butyldibenzo-18-crown-6 (DTBDB18C6), Di-Isooktyldibenzo-18-crown-6 (DIODB18C6), Dibenzo-21-crown-7 (DB21C7), Bis-4,4'(5')[1-hydroxy-2-ethylhexyl]benzo-18-crown-6 (Crown XVII) und mindestens ein Kronenether aus der Gruppe Di-tert-butyldizyklohexano-16-crown-6 (DTBDCH18C6), Di-isooktyldizyklohexano-18-crown-6 (DIODCH18C6), Dizykiohexano-18-aown-6 (DCH18C8), Bis-4,4'(5')[1-hydroxyheptyl]zykiohexo-18-crown-6 (Crown XVI) enthält.

9. Extraktionsmittel nach einem der Ansprüche 1 bis 3,
**dadurch gekennzeichnet,**
**dass** es der gemeinsamen Extraktion der Cs- und Sr-Radtonuklide aus Cs- und Sr-Kationen enthaltenden Abfällen angepasst wird und eine Mischung der Kronenether Dizykohexyl-18-crown-6 und Dibenzo-21-crown-7 enthält.

10. Extraktionsmittel nach Anspruch 8 oder 9,
**dadurch gekennzeichnet,**
**dass** das organische Lösungsmittel vorzugsweise das folgende Komponentenverhältnis in Vol.- % aufweist:
polyfluorierter Alkohot-Tetomer
1,1,7-Trihydrododecafluorheptanol 87,
ein Gemisch aus Polyoxyethylenglykolethern
der synthetischen, primaren, höheren Fettalkohole
der Fraktion C₁₂ - C₁₄ 13.

11. Extraktionsmittel nach einem der Ansprüche 8 bis10,
**dadurch gekennzeichnet,**
**dass** die Konzentration jedes Kronenethers von etwa 0,04 mol/l bis etwa 0,1 mol/l beträgt.

12. Verfahren zur Regeneration eines verbrauchten Extraktionsmittels, **dadurch gekennzeichnet,**
**dass** das Extraktionsmittel Komplexe makrozyklischer Verbindungen enthält, die aus Kronenthem gewählt werden, die aus Folgendem bestehen:
- Kronenether mit nicht substituierten aromatischen Fragmenten,
- Kronenether mit substituierten, aromatischen Fragmenten, die Alkyl- und/oder Hydroxyalkylsubstituenten linearen und/oder verzweigten Baus aufweisen,
- Kronenether mit nicht substituierten Zyklohexanfragmenten,
- Kronenether mit substituierten Zyklohexanfragmenten, die Alkyl- und/oder Hydroxyalkylsubstituenten linearen und/oder verzweigten Baus aufweisen,
- Kronen mit substituierten Fragmenten -O-CHR-CH₂O- mit R = normales oder verzweigtes Alkyl bzw. Hydroxyalkyl enthalten und
**dass** die Kationen in einem organischen Lösungsmittel, das das polyfluorierte Alkohol-Telomer 1,1,7-Trihydrododecafluorheptanol-1 enthält, mit der Bearbeitung des gebrauchten Extraktionsmittels mit einer Wasserlösung aus Kalium-Ethylen-Diamin-tetraazetat mit einem pH-Wert von etwa 8,0 bis etwa 9,0 extrahiert werden.

13. Regenerationsverfahren nach Anspruch 12,
**dadurch gekennzeichnet,**
**dass** die Konzentration des Kaiium-Ethylen-Diamin-tetraazetats in der Wasserlösung im Bereich von etwa 0,02 mol/l bis etwa 0,03 mol/l gewählt wird.

14. Regenerationsverfahren nach Anspruch 12,
**dadurch gekennzeichnet,**
**dass** der pH-Wert durch einen Kaliumhydroxid-Zusatz eingestellt wird.

15. Verfahren zur Extraktion radioaktiver Nuklide aus einer sauren Wasserlösung hochaktiver Abfälle, die weitere Makroverunreinigungen einschließlich Natrium enthalten,
**dadurch gekennzeichnet,**
**dass** die wässrige Lösung der Abfälle mit dem Extraktionsmittel bearbeitet wird, dass das Extraktionsmittel eine makrozyklische Verbindung enthält, die die Ionen der radioaktiven Nuklide aufnehmen kann, wobei der Extrakt ausgebildet wird, dass die Reextraktion der Radionuklide aus dem Extrakt mittels entionisierten Wassers durchgeführt wird und dass das Extraktionsmittel eine makrozyklische Verbindung enthält, die aus der Gruppe der Kronenethern gewählt ist, die aus Folgendem bestehen:
- Kronenether mit nicht substituierten, aromatischen Fragmenten,
- Kronenether mit substituierten, aromatischen Fragmenten, die Alkyl- und/oder Hydroxyalkylsubstituenten linearen und/oder verzweigten Baus aufweisen,
- Kronenether mit nicht substituierten Zyklohexanfragmenten
- Kronenether mit substituierten Zyklohexanfragmenten, die Alkyl- und/oder Hydroxyalkylsubstituenten linearen und/oder verzweigten Baus aufweisen,
- Kronenether mit ersetzten Fragmenten -O-CHR-CH₂O- mit R = normales oder verzweigtes Alkyl bzw. Hydroxyalkyl und
**dass** die Extraktion in einem organischen Lösungsmittel erfolgt, das das polyfluorierte Alkohol-Tetomer 1,1,7-Trihydrododecafluorheptanol-1 enthält.

16. Verfahren nach Anspruch 16,
**dadurch gekennzeichnet,**
**dass** im Extraktionsmittel das organische Lösungsmittel ein Gemisch aus Polyoxyethylenglukolethem synthetischer, primärer, höherer Fettalkohole der Fraktion C₁₂ - C₁₄ mit der allgemeinen Formel CₙH₂ₙ₊₁O (C₂H₄O)ₘH mit n = 12+14, m = 2 zusätzlich enthält.

17. Verfahren nach Anspruch 16,
**dadurch gekennzeichnet,**
**dass** das organische Lösungsmittel das folgende Komponentenverhältnis in Vol.-% aufweist:
polyfluoriertes Alkohol-Telomer
1,1,7-Trihydrododecafiuorheptanol 80-99,
ein Gemisch aus Polyoxyethylenglycolethem
der synthetischen, primären, höheren Fettalkohole
der Fraktion C₁₂ - C₁₄ 20-1.

18. Verfahren nach einem der Ansprüche 15 bis 17,
**dadurch gekennzeichnet,**
**dass** es der Extraktion von Cäsiumnukliden angepasst ist und das Extraktionsmittel Kronenether enthält, die aus der folgenden Gruppe gewählt sind: Di-tert-butyldibenzo-18-crown-6 (DTBDB18C6), Di-isooktyldibenzo-18-crown-6 (DIODB18C6), Dibenzo-21-crown-7 (DB21C7), Bis-4,4'(5') [1-hydroxy-2-ethylhexyl] benzo-18-crown-6 (Crown XVII).

19. Verfahren nach Anspruch 18,
**dadurch gekennzeichnet,**
**dass** das Extraktionsmittel Dibenzo-21-crown-7 in einer Konzentration von etwa 0,04 mol/l bis etwa 0,95 mol/l des Extraktionsmittels enthält.

20. Verfahren nach einem der Ansprüche 15 bis 17,
**dadurch gekennzeichnet,**
**dass** es der Extraktion von Strontiumnukliden angepasst ist und das Extraktionsmittel Kronenether enthält, die aus der folgenden Gruppe ausgewählt sind: Di-tert-butyldizyklohexano-18-crown-6 (DTBDCH18C6), Di-isooktyldizyklohexano-18-crown-6 (DIODCH18C6), Di-zyklohexano-18-crown-6 (DCH18C6), Bis-4,4'(5')[1-hydroxyheptyl]zyklohexo-18-crown-8 (Crown XVI).

21. Verfahren nach Anspruch 20,
**dadurch gekennzeichnet,**
**dass** das Extraktionsmittel Dizyklohexano-18-crown-8 in einer Konzentration von etwa 0,04 mol/l bis etwa 0,1 mol/l des Extraktionsmittels enthält.

22. Verfahren nach einem der Ansprüche 15 bis 17,
**dadurch gekennzeichnet,**
**dass** es der gemeinsamen Extraktion radioaktiver Nuklide von Cäsium und Strontium angepasst ist und dass das Extraktionsmittel ein Gemisch aus Kronenethern enthält, in dem mindestens ein Kronenether aus der folgenden Gruppe gewählt ist: Di-tert-butyldibenzo-18-crown-6 (DTBDB18C6), Di-isooktyldibenzo-18-crown-8 (DIODB18C6), Dibenzo-21-crown-7 (DB21C7), Bis - 4,4'(5')[1-hydroxy-2-ethylhexyl]benzo-18-crown-6 (Crown XVII) und mindestens ein Kronenether aus der folgenden Gruppe: Di-tert-butyldizyklohexano-18-crown-6 (DTBDCH18C6), Di-isooktyldizyklohexano-18-crown-6 (DIODCH18C6), Dizyklohexano-18-crown-8 (DCH18C6), Bis-4,4'(5')[1-hydroxyheptyl]zyklohexaiso-18-crown-6 (Crown XVI) gewählt ist.

23. Verfahren nach Anspruch 22,
**dadurch gekennzeichnet,**
**dass** das organische Lösungsmittel vorzugsweise das folgende Komponentenverhältnis in Vol.- % aufweist:
polyfluoriertes Alkohol-Telomer
1,1,7-Trihydrododecafluomeptanol 87,
eins Gemisch aus Polyoxyethylenglykolethern
synthetischer, primärer, höherer Fettalkohole
der Fraktion C₁₂ - C₁₄ 13.

24. Verfahren nach Anspruch 22 oder 23,
**dadurch gekennzeichnet,**
**dass** das Extraktionsmittel eine Mischung aus Dizykiohexano-18-crown-8 und Dibenzo-21-crown-7 enthält.

25. Verfahren nach Anspruch 24,
**dadurch gekennzeichnet,**
**dass** die Konzentration jedes Kronenethers in der Mischung von etwa 0,04 mol/l bis etwa 0,1 mol/l des Extraktionsmittels beträgt.

26. Verfahren nach Anspruch 15,
**dadurch gekennzeichnet,**
**dass** das umlaufende Extraktionsmittel, das die Komplexe makrozyklischer Verbindungen mit Kationen enthält, zusätzlich entzogen und zur Wiederverwendung durch Bearbeitung mit der Wasserlösung aus Kalium-Ethylen-Diamin-tetraazetat mit einem pH-Wert von etwa 8,0 bis etwa 9,0 zurückgewonnen wird.

27. Verfahren nach Anspruch 26,
**dadurch gekennzeichnet,**
**dass** die Konzentration des Kalium-Ethylen-Diamin-tetraazetats in der Wasserlösung im Bereich von etwa 0,02 mol/l bis etwa 0,03 mol/l gewählt wird.

28. Verfahren nach Anspruch 26,
**dadurch gekennzeichnet,**
**dass** der pH-Wert in der Wasserlösung mit einem Zusatz von Kaliumhydroxid eingestellt wird.

29. Verfahren nach einem der Ansprüche 15 bis 28,
**dadurch gekennzeichnet,**
**dass** die Verfahrensschritte in dynamischer Gegenstrombetriebsart durchgeführt werden.

## Claims

1. An extracting agent for extracting radionuclides from acidic aqueous solutions of highly active wastes from radiochemical production, which wastes also contain other macroadmixtures including sodium,
**characterized in that**
the extracting agent contains a macrocyclic compound, which can absorb the ions of the radionuclides and is selected from the group of the following crown ethers:
- crown ether with non-substituted aromatic fragments,
- crown ether with substituted aromatic fragments, which have alkyl and/or hydroxyalkyl substituents of linear and/or branched structure,
- crown ether with non-substituted cyclohexane fragments,
- crown ether with substituted cyclohexane fragments, which have alkyl and/or hydroxyalkyl substituents of linear and/or branched structure,
- crown ether with substituted fragments -O-CHR-CH₂O-, where R = normal or branched alkyl or hydroxyalkyl; and
that the extracting agent is used in an organic solvent which contains the polyfluorinated alcohol telomer 1,1,7-trihydrododecafluoroheptanol-1.

2. The extracting agent as defined by claim 1,
**characterized in that**
the organic solvent additionally contains a mixture of polyoxyethylene glycol ethers of synthetic, primary, higher fatty alcohols of the fraction C₁₂-C₁₄, having the general formula CₙH₂ₙ₊₁O (C2H₄O)ₘH, where n = 12-14 and m = 2.

3. The extracting agent as defined by claim 2,
**characterized in that**
the organic solvent has the following ratio of the components, in vol.-%:
polyfluorinated alcohol telomer
1,1,7-trihydrododecafluoroheptanol 80,99
a mixture of polyoxyethylene glycol ethers of the synthetic, primary, higher fatty alcohols of the fraction C₁₂-C₁₄ 20-1.

4. The extracting agent as defined by one of claims 1 through 3,
**characterized in that**
it is adapted for the extraction of radioactive cesium nuclides from wastes containing Cs cations and contains crown ethers, which are selected from the following group:
di-tert-butyldibenzo-18-crown-6 (DTBDB18C6), di-isooctyldibenzo-18-crown-6 (DIODB18C6), dibenzo-21-crown-7 (DB21C7), bis-4,4'(5')[1-hydroxy-2-ethylhexyl]benzo-18-crown-6 (Crown XVII).

5. The extracting agent as defined by one of claims 1 through 3,
**characterized in that**
it is adapted for the extraction of Cs radionuclides from wastes containing Cs cations and contains dibenzo-21-crown-7 in a concentration of approximately 0.04 mol/l to approximately 0.095 mol/l of the extracting agent.

6. The extracting agent as defined by one of claims 1 through 3,
**characterized in that**
it is adapted for the extraction of radioactive strontium nuclides from wastes containing Sr cations and crown ether is selected from the group comprising di-tert-butyldicyclohexano-18-crown-6 (DTBDCH18C6), di-isooctyldicyclohexano-18-crown-6 (DIODCH18C6), dicyclohexano-18-crown-6 (DCH18C6), bis-4,4'(5')[1-hydroxyheptyl]cyclohexo-18-crown-6 (Crown XVI).

7. The extracting agent as defined by one of claims 1 through 3,
**characterized in that**
it is adapted for the extraction of Cr radionuclides from wastes containing Cr cations and contains dicyclohexano-18-crown-6 in a concentration of approximately 0.04 mol/l to approximately 0.95 mol/l.

8. The extracting agent as defined by one of claims 1 through 3,
**characterized in that**
it is adapted for the common extraction of radionuclides of strontium and cesium from wastes containing strontium and cesium cations and contains a mixture of crown ethers, in which at least one crown ether is selected from the group which contains di-tert-butyldibenzo-18-crown-6 (DTBDB18C6), di-isooctyldibenzo-18-crown-6 (DIODB18C6), dibenzo-21-crown-7 (DB21C7), bis-4,4'(5')[1-hydroxy-2-ethylhexyl]benzo-18-crown-6 (Crown XVII), and contains at least one crown ether from the group comprising di-tert-butyldicyclohexano-18-crown-6 (DTBDCH18C6), di-isooctyldicyclohexano-18-crown-6 (DIODCH18C6), dicyclohexano-18-crown-6 (DCH18C6), bis-4,4'(5')[1-hydroxyheptyl]cyclohexo-18-crown-6 (Crown XVI).

9. The extracting agent as defined by one of claims 1 through 3,
**characterized in that**
it is adapted for the common extraction of the Cs and Cr radionuclides from wastes containing Cs and Cr cations and contains a mixture of the crown ethers dicyclohexyl-18-crown-6 and dibenzo-21-crown-7.

10. The extracting agent as defined by claim 8 or 9,
**characterized in that**
the organic solvent preferably has the following of the component ratio in vol.-%:
polyfluorinated alcohol telomer
1,1,7-trihydrododecafluoroheptanol 87
a mixture of polyoxyethylene glycol ethers of the synthetic, primary, higher fatty alcohols of the fraction C₁₂-C₁₄ 13.

11. The extracting agent as defined by one of claims 8 through 10,
**characterized in that**
the concentration of each crown ether amounts to from approximately 0.04 mol/l to approximately 0.1 mol/l.

12. A method for regeneration of a spent extracting agent, **characterized in that** the extracting agent contains complexes of macrocyclic compounds which are selected from crown ethers that comprise the following:
- crown ether with non-substituted aromatic fragments,
- crown ether with substituted aromatic fragments, which have alkyl and/or hydroxyalkyl substituents of linear and/or branched structure,
- crown ether with non-substituted cyclohexane fragments,
- crown ether with substituted cyclohexane fragments, which have alkyl and/or hydroxyalkyl substituents of linear and/or branched structure,
- crown ether with substituted fragments -O-CHR-CH₂O-, where R = normal or branched alkyl or hydroxyalkyl; and
that the cations, in an organic solvent that contains the polyfluorinated alcohol telomer 1,1,7-trihydrododecafluoroheptanol-1, are extracted, with the processing of the used extracting agent, with an aqueous solution of potassium ethylene diamine tetraacetate with a pH value of approximately 8.0 to approximately 9.0.

13. The regeneration method as defined by claim 12,
**characterized in that**
the concentration of the potassium ethylenediamene tetraacetate in the aqueous solution is selected in the range from approximately 0.02 mol/l to approximately 0.03 mol/l.

14. The regeneration method as defined by claim 12,
**characterized in that**
the pH value is adjusted by means of a potassium hydroxide addition.

15. A method for extracting radionuclides from an acidic aqueous solution of highly active wastes, which contain further macrocontaminants including sodium,
**characterized in that**
the aqueous solution of the wastes is processed with the extracting agent; that the extracting agent contains a macrocyclic compound, which can absorb the ions of the radionuclides, the extract being embodied such that the reextraction of the radionuclides from the extract is performed by means of deionized water; and that the extracting agent contains a macrocyclic compound which is selected from the group of crown ethers that comprise the following:
- crown ether with non-substituted aromatic fragments,
- crown ether with substituted aromatic fragments, which have alkyl and/or hydroxyalkyl substituents of linear and/or branched structure,
- crown ether with non-substituted cyclohexane fragments,
- crown ether with substituted cyclohexane fragments, which have alkyl and/or hydroxyalkyl substituents of linear and/or branched structure,
- crown ether with substituted fragments -O-CHR-CH₂O-, where R = normal or branched alkyl or hydroxyalkyl; and
that the extraction takes place in an organic solvent, which contains the polyfluorinated alcohol telomer 1,1,7-trihydrododecafluoroheptanol-1.

16. The method as defined by claim 16,
**characterized in that**
in the extracting agent, the organic solvent additionally contains a mixture of polyoxyethylene glycol ethers of synthetic, primary, higher fatty alcohols of the fraction C₁₂-C₁₄, having the general formula CₙH₂ₙ₊₁O (C₂H₄O)ₘH, where n = 12+14 and m = 2.

17. The method as defined by claim 16,
**characterized in that**
the organic solvent preferably has the following of the component ratio in vol.-%:
polyfluorinated alcohol telomer
1,1,7-trihydrododecafluoroheptanol 80, 99
a mixture of polyoxyethylene glycol ethers of the synthetic, primary, higher fatty alcohols of the fraction C₁₂-C₁₄ 20-1.

18. The method as defined by one of claims 15 through 17
**characterized in that**
it is adapted for the extraction of radioactive cesium nuclides, and the extracting agent contains crown ethers, which are selected from the following group: di-tert-butyldibenzo-18-crown-6 (DTBDB18C6), di-isooctyldibenzo-18-crown-6 (DIODB18C6), dibenzo-21-crown-7 (DB21C7), bis-4,4'(5')[1-hydroxy-2-ethylhexyl]benzo-18-crown-6 (Crown XVII).

19. The method as defined by claim 18,
**characterized in that**
the extracting agent contains dibenzo-21-crown-7 in a concentration of approximately 0.04 mol/l to approximately 0.95 mol/l of the extracting agent.

20. The method as defined by one of claims 15 through 17,
**characterized in that**
it is adapted for the extraction of radioactive strontium nuclides, and the extracting agent contains crown ethers which are selected from the group comprising di-tert-butyldicyclohexano-18-crown-6 (DTBDCH18C6), di-isooctyldicyclohexano-18-crown-6 (DIODCH18C6), dicyclohexano-18-crown-6 (DCH18C6), bis-4,4'(5')[1-hydroxyheptyl]cyclohexo-18-crown-6 (Crown XVI).

21. The method as defined by claim 20,
**characterized in that**
the extracting agent contains dicyclohexano-18-crown-6 in a concentration of approximately 0.04 mol/l to approximately 0.1 mol/l of the extracting agent.

22. The method as defined by one of claims 15 through 17,
**characterized in that**
it is adapted for the common extraction of radionuclides of cesium and strontium; and that the extracting agent contains a mixture of crown ethers, in which at least one crown ether is selected from the following group: di-tert-butyldibenzo-18-crown-6 (DTBDB18C6), di-isooctyldibenzo-18-crown-6 (DIODB18C6), dibenzo-21-crown-7 (DB21C7), bis-4,4'(5')[1-hydroxy-2-ethylhexyl]benzo-18-crown-6 (Crown XVII), and at least one crown ether is selected from the following group: di-tert-butyldicyclohexano-18-crown-6 (DTBDCH18C6), di-isooctyldicyclohexano-18-crown-6 (DIODCH18C6), dicyclohexano-18-crown-6 (DCH18C6), bis-4,4'(5')[1-hydroxyheptyl]cyclohexo-18-crown-6 (Crown XVI).

23. The method as defined by claim 22,
**characterized in that**
the organic solvent preferably has the following of the component ratio in vol.-%:
polyfluorinated alcohol telomer
1,1,7-trihydrododecafluoroheptanol 87
a mixture of polyoxyethylene glycol ethers of the synthetic, primary, higher fatty alcohols of the fraction C₁₂-C₁₄ 13.

24. The method as defined by claim 22 or 23,
**characterized in that**
the extracting agent contains a mixture of dicyclohexano-18-crown-6 and dibenzo-21-crown-7.

25. The method as defined by claim 24,
**characterized in that**
the concentration of each crown ether amounts to from approximately 0.04 mol/l to approximately 0.1 mol/l.

26. The method as defined by claim 15,
**characterized in that**
the circulating extracting agent, which contains the complexes of macrocyclic compounds with cations, is additionally withdrawn, and for reuse is recovered by processing with the aqueous solution of potassium ethylenediamene tetraacetate having a pH value of approximately 8.0 to approximately 9.0.

27. The method as defined by claim 26,
**characterized in that**
the concentration of the potassium ethylenediamene tetraacetate in the aqueous solution is selected in the range from approximately 0.02 mol/l to approximately 0.03 mol/l.

28. The method as defined by claim 26,
**characterized in that**
the pH value in the aqueous solution is adjusted with an addition of potassium hydroxide.

29. The method as defined by one of claims 15 through 28,
**characterized in that**
the method steps are performed in a dynamic countercurrent mode.

## Revendications

1. Agent d'extraction destiné à l'extraction de radionucléides à partir de solutions aqueuses acides de déchets fortement radioactifs issus de la production de la chimie nucléaire, et qui contiennent également d'autres macroadditifs y compris du sodium, **caractérisé en ce que** l'agent d'extraction contient un composé macrocyclique qui peut capter les ions de radionucléides et qui est sélectionné dans le groupe des éthers-couronnes suivants :
- éther-couronnes ayant des fragments aromatiques non substitués,
- éthers-couronnes ayant des fragments aromatiques substitués, qui présentent une structure linéaire et/ou ramifiée à substituant alkyle et/ou hydroxyalkyle,
- éthers-couronnes avec fragments de cyclohexanes non substitués,
- éthers-couronnes avec fragments de cyclohexanes substitués, qui présentent une structure linéaire et/ou ramifiée à substituant alkyle et/ou hydroxyalkyle,
- éthers-couronnes avec fragments substitués O-CHR-CH₂O-, avec R = groupe alkyle ou hydroxyalkyle normal ou ramifié, et
**en ce que** l'agent d'extraction est utilisé dans un solvant organique qui contient le télomère d'alcool polyfluoré 1,1,7-trihydrododécafluoroheptanol-1.

2. Agent d'extraction selon la revendication 1, **caractérisé en ce que** le solvant organique contient en outre un mélange de polyoxyéthylèneglycoléthers d'alcools gras supérieurs primaires synthétiques de la fraction C₁₂-C₁₄ ayant pour formule générale CₙH₂ₙ₊₁O (C₂H₄O)ₘH, avec n = 12-14, m = 2.

3. Agent d'extraction selon la revendication 2, **caractérisé en ce que** le solvant organique présente le rapport suivant des composés, en pourcentage en volume :
télomère d'alcool polyfluoré 1,1,7-trihydrododécafluoroheptanol 80-99,
un mélange de polyoxyéthylèneglycoléthers d'alcools gras supérieurs primaires synthétiques de la fraction C₁₂-C₁₄ 20-1.

4. Agent d'extraction selon l'une des revendications 1 à 3, **caractérisé en ce qu'**il est adapté à l'extraction de nucléides de césium radioactifs de déchets contenant des cations Cs et contient des éthers-couronnes qui sont sélectionnés dans le groupe suivant: di-tert-butyldibenzo-18-couronne-6 (DTBDB18C6), di-isooctyldibenzo-18-couronne-6 (DIODB18C6), dibenzo-21-couronne-7 (DB21C7), bis-4,4'(5')[1-hydroxy-2-éthylhexyl]benzo-18-couronne-6 (couronne XVII).

5. Agent d'extraction selon l'une des revendications 1 à 3, **caractérisé en ce qu'**il est adapté à l'extraction de radionucléides de césium de déchets contenant des cations Cs et contient du dibenzo-21-couronne-7 dans une concentration d'environ 0,04 mol/l jusqu'à environ 0,095 mol/l de l'agent d'extraction.

6. Agent d'extraction selon l'une des revendications 1 à 3, **caractérisé en ce qu'**il est adapté à l'extraction de nucléides de strontium radioactifs de déchets contenant des cations Sr et contient des éthers-couronnes qui sont sélectionnés dans le groupe suivant: di-tert-butyldicyclohexano-18-couronne-6 (DTBDCH18C6), di-isooctyldicyclohexano-18-couronne-6 (DIODCH18C6), dicyclohexano-18-couronne-6 (DCH18C6), bis-4,4'(5')[1-hydroxyheptyl]cyclohexo-18-couronne-6 (couronne XVI).

7. Agent d'extraction selon l'une des revendications 1 à 3, **caractérisé en ce qu'**il est adapté à l'extraction de radionucléides de Sr de déchets contenant des cations Sr et contient du dicyclohexano-18-couronne-6 dans une concentration d'environ 0,04 mol/l jusqu'à environ 0,95 mol/l.

8. Agent d'extraction selon l'une des revendications 1 à 3, **caractérisé en ce qu'**il est adapté à l'extraction conjointe de nucléides radioactifs du strontium et du césium de déchets contenant des cations strontium et césium et contient un mélange d'éthers-couronnes dans lequel au moins un éther-couronne est sélectionné dans le groupe composé de di-tert-butyldibenzo-18-couronne-6 (DTBDB18C6), di-isooctyldibenzo-18-couronne-6 (DIODB18C6), dibenzo-21-couronne-7 (DB21C7), bis-4,4'(5')[1-hydroxy-2-éthylhexyl]benzo-18-couronne-6 (couronne XVII) et qui contient au moins un éther-couronne sélectionné dans le groupe composé du di-tert-butyldicyclohexano-18-couronne-6 (DTBDCH18C6), di-isooctyldicyclohexano-18-couronne-6 (DIODCH18C6), dicyclohexano-18-couronne-6 (DCH18C6), bis-4,4'(5')[1 -hydroxyheptyl]cyclohexo-18-couronne-6 (couronne XVI).

9. Agent d'extraction selon l'une des revendications 1 à 3, **caractérisé en ce qu'**il est adapté à l'extraction conjointe des radionucléides de Cs et Sr de déchets contenant des cations Cs et Sr et contient un mélange des éthers-couronnes dicyclohexyl-18-couronne-6 et dibenzo-21-couronne-7.

10. Agent d'extraction selon la revendication 8 ou 9, **caractérisé en ce que** le solvant organique présente de préférence le rapport des composés suivants, en pourcentage en volume :
télomère d'alcool polyfluoré 1,1,7-trihydrododécafluoroheptanol 87,
un mélange de polyoxyéthylèneglycoléthers d'alcools gras supérieurs primaires synthétiques de la fraction C₁₂-C₁₄13.

11. Agent d'extraction selon l'une des revendications 8 à 10, **caractérisé en ce que** la concentration de chaque éther-couronne est d'environ 0,04 mol/l jusqu'à environ 0,1 mol/l.

12. Procédé de régénération d'un agent d'extraction usagé, **caractérisé en ce que** l'agent d'extraction contient des composés macrocycliques complexes qui sont sélectionnés parmi des éthers-couronnes qui se composent des suivants :
- éther-couronnes ayant des fragments aromatiques non substitués,
- éthers-couronnes ayant des fragments aromatiques substitués, qui présentent une structure linéaire et/ou ramifiée à substituant alkyle et/ou hydroxyalkyle,
- éthers-couronnes avec fragments de cyclohexanes non substitués,
- éthers-couronnes avec fragments de cyclohexanes substitués, qui présentent une structure linéaire et/ou ramifiée à substituant alkyle et/ou hydroxyalkyle,
- éthers-couronnes avec fragments substitués O-CHR-CH₂O-, avec R = groupe alkyle ou hydroxyalkyle normal ou ramifié, et
**en ce que** les cations sont extraits dans un solvant organique qui contient le télomère d'alcool polyfluoré 1,1,7-trihydrododécafluoroheptanol-1, avec le traitement de l'agent d'extraction usagé avec une solution aqueuse d'éthylènediamine-tétraacétate de potassium avec une valeur de pH d'environ 8,0 jusqu'à environ 9,0.

13. Procédé de régénération selon la revendication 12, **caractérisé en ce que** la concentration de l'éthylènediamine-tétraacétate de potassium dans la solution aqueuse est sélectionnée dans la plage allant d'environ 0,02 mol/l jusqu'à environ 0,03 mol/l.

14. Procédé de régénération selon la revendication 12, **caractérisé en ce que** la valeur de pH est ajustée par un ajout d'hydroxyde de potassium.

15. Procédé d'extraction de nucléides radioactifs à partir d'une solution aqueuse acide de déchets fortement radioactifs qui contiennent d'autres macro-impuretés y compris du sodium, **caractérisé en ce que** la solution aqueuse des déchets est traitée avec l'agent d'extraction, **en ce que** l'agent d'extraction contient un composé macrocyclique qui peut capter les ions des nucléides radioactifs, où l'extraction est formée **en ce que** la réextraction des radionucléides à partir de l'extrait est conduite au moyen d'eau désionisée et **en ce que** l'agent d'extraction contient un composé macrocyclique qui est sélectionné dans le groupe des éthers-couronnes suivants :
- éther-couronnes ayant des fragments aromatiques non substitués,
- éthers-couronnes ayant des fragments aromatiques substitués, qui présentent une structure linéaire et/ou ramifiée à substituant alkyle et/ou hydroxyalkyle,
- éthers-couronnes avec fragments de cyclohexanes non substitués,
- éthers-couronnes avec fragments de cyclohexanes substitués, qui présentent une structure linéaire et/ou ramifiée à substituant alkyle et/ou hydroxyalkyle,
- éthers-couronnes avec fragments substitués O-CHR-CH₂O-, avec R = groupe alkyle ou hydroxyalkyle normal ou ramifié, et
**en ce que** l'extraction se fait dans un solvant organique qui contient le télomère d'alcool polyfluoré 1,1,7-trihydrododécafluoroheptanol-1.

16. Procédé selon la revendication 15, **caractérisé en ce que** dans l'agent d'extraction, le solvant organique contient un mélange de polyoxyéthylèneglycoléthers d'alcools gras supérieurs primaires synthétiques de la fraction C₁₂-C₁₄ ayant pour formule générale CₙH₂ₙ₊₁O(C₂H₄O)ₘH, avec n = 12-14, m = 2.

17. Procédé selon la revendication 16, **caractérisé en ce que** le solvant organique présente le rapport suivant des composés, en pourcentage en volume :
télomère d'alcool polyfluoré 1,1,7-trihydrododécafluoroheptanol 80-99,
un mélange de polyoxyéthylèneglycoléthers d'alcools gras supérieurs primaires synthétiques de la fraction C₁₂-C₁₄ 20-1.

18. Procédé selon l'une des revendications 15 à 17, **caractérisé en ce qu'**il est adapté à l'extraction de nucléides de césium et **en ce que** l'agent d'extraction contient des éthers-couronnes qui sont sélectionnés dans le groupe suivant : di-tert-butyldibenzo-18-couronne-6 (DTBDB18C6), di-isooctyldibenzo-18-couronne-6 (DIODB18C6), dibenzo-21-couronne-7 (DB21 C7), bis-4,4'(5')[1-hydroxy-2-éthylhexyl]benzo-18-couronne-6 (couronne XVII).

19. Procédé selon la revendication 18, **caractérisé en ce que** l'agent d'extraction contient du dibenzo-21-couronne-7 dans une concentration d'environ 0,04 mol/l jusqu'à environ 0,95 mol/l de l'agent d'extraction.

20. Procédé selon l'une des revendications 15 à 17, **caractérisé en ce qu'**il est adapté à l'extraction de nucléides de strontium et l'agent d'extraction contient des éthers-couronnes qui sont sélectionnés dans le groupe suivant : di-tert-butyldicyclohexano-18-couronne-6 (DTBDCH18C6), di-isooctyldicyclohexano-18-couronne-6 (DIODCH18C6), dicyclohexano-18-couronne-6 (DCH18C6), bis-4,4'(5')[1-hydroxyheptyl]cyclohexo-18-couronne-6 (couronne XVI).

21. Procédé selon la revendication 20, **caractérisé en ce que** l'agent d'extraction contient du dicyclohexano-18-couronne-6 dans une concentration d'environ 0,04 mol/l jusqu'à environ 0,1 mol/l de l'agent d'extraction.

22. Procédé selon l'une des revendications 15 à 17, **caractérisé en ce qu'**il est adapté à l'extraction conjointe de nucléides radioactifs du strontium et du césium et **en ce que** l'agent d'extraction contient un mélange d'éthers-couronnes dans lequel au moins un éther-couronne est sélectionné dans le groupe suivant : di-tert-butyldibenzo-18-couronne-6 (DTBDB18C6), di-isooctyldibenzo-18-couronne-6 (DIODB18C6), dibenzo-21-couronne-7 (DB21C7), bis-4,4'(5')[1-hydroxy-2-éthylhexyl]benzo-18-couronne-6 (couronne XVII) et au moins un éther-couronne est sélectionné dans le groupe suivant: di-tert-butyldicyclohexano-18-couronne-6 (DTBDCH18C6), di-isooctyldicyclohexano-18-couronne-6 (DIODCH18C6), dicyclohexano-18-couronne-6 (DCH18C6), bis-4,4'(5')[1-hydroxyheptyl]cyclohexo-18-couronne-6 (couronne XVI).

23. Procédé selon la revendication 22, **caractérisé en ce que** le solvant organique présente de préférence le rapport suivant des composés, en pourcentage en volume :
télomère d'alcool polyfluoré 1,1,7-trihydrododécafluoroheptanol87,
un mélange de polyoxyéthylèneglycoléthers d'alcools gras supérieurs primaires synthétiques de la fraction C₁₂-C₁₄ 13.

24. Procédé selon la revendication 22 ou 23, **caractérisé en ce que** l'agent d'extraction contient un mélange de dicyclohexano-18-couronne-6 et de dibenzo-21-couronne-7.

25. Procédé selon la revendication 24, **caractérisé en ce que** la concentration de chaque éther-couronne dans le mélange est d'environ 0,04 mol/l jusqu'à environ 0,1 mol/l de l'agent d'extraction.

26. Procédé selon la revendication 15, **caractérisé en ce que** l'agent d'extraction circulant qui contient les composés macrocycliques complexes avec des cations est en outre extrait et récupéré pour une réutilisation par traitement avec une solution aqueuse d'éthylènediamine-tétraacétate de potassium avec une valeur de pH d'environ 8,0 jusqu'à environ 9.0.

27. Procédé selon la revendication 26, **caractérisé en ce que** la concentration de l'éthylènediamine-tétraacétate de potassium dans la solution aqueuse est sélectionnée dans la plage allant d'environ 0,02 mol/l jusqu'à environ 0,03 mol/l.

28. Procédé selon la revendication 26, **caractérisé en ce que** la valeur de pH dans la solution aqueuse est ajustée avec un ajout d'hydroxyde de potassium.

29. Procédé selon l'une des revendications 15 à 28, **caractérisé en ce que** les étapes de procédé sont réalisées selon un mode dynamique à contre-courant.
